# EUROPEAN PATENT APPLICATION

(11) **EP 4 750 118 A1**
(43) Date of publication of application: **27.05.2026**
(21) Application number: 24842886.4
(22) Date of filing: 20.06.2024
(51) Int. Cl.: H04W 16/26, H04W 72/20, H04W 84/12, H04W 88/04

(54) **ACCESS POINT, TERMINAL, AND COMMUNICATION METHOD**

(30) Priority: 20.07.2023 JP 2023118346
(71) Applicant: Panasonic Intellectual Property Corporation of America, Torrance, CA 90504 (US)
(72) Inventor: KANAYA, Hiroyuki, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP); IWAI, Takashi, Kadoma-shi, Osaka 571-0057 (JP); TAKATA, Tomofumi, Kadoma-shi, Osaka 571-0057 (JP)
(74) Representative: Grünecker Patent- und Rechtsanwälte PartG mbB
(86) International application number: PCT/JP2024/022341
(87) International publication number: WO 2025/018090

(57) **Abstract**

This access point is provided with: a control circuit that controls a relay operation for at least one of a first terminal, which performs uplink transmission, and a second terminal, which relays the uplink transmission; and a reception circuit that receives a signal of the uplink transmission in accordance with the relay operation control.

## Description

### Technical Field

The present disclosure relates to an access point, a terminal, and a communication method.

### Background Art

A requirement specification for a successor standard (for example, also referred to as "Ultra High Reliability (UHR)") of IEEE 802.11be (hereinafter, referred to as "11be") which is a standard of the Institute of Electrical and Electronics Engineers (IEEE) 802.11 has been developed.

### Citation List

### Patent Literature

NPL 1
   IEEE 802.11-22/1919r1, Considerations on UHR PAR
NPL 2
   IEEE 802.11-23/0042r0, Thought for Range Extension in UHR
NPL 3
   IEEE P802.11be/D3.0, January 2023
NPL 4
   IEEE Std 802.11ax-2021

### Summary of Invention

However, a method for controlling signal transmission in radio communication such as a wireless LAN has not been sufficiently studied.

Anon-limiting embodiment of the present disclosure facilitates providing an access point, a terminal, and a communication method each capable of improving the efficiency of transmission control in radio communication.

An access point according to one exemplary embodiment of the present disclosure includes: control circuitry, which, in operation, controls a relay operation for at least one of a first terminal that performs uplink transmission and a second terminal that relays the uplink transmission; and reception circuitry, which, in operation, receives a signal of the uplink transmission in accordance with a control of the relay operation.

Note that general or specific embodiments may be implemented as a system, an apparatus, a method, an integrated circuit, a computer program, a recording medium, or any selective combination thereof.

According to one exemplary embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram showing an exemplary operation of downlink (DL) transmission using a relay;
FIG. 2 is a diagram showing an example of a format of a Triggered Transmission Opportunity (TXOP) Sharing Mode included in a Multi User (MU)-Request to Send (RTS) Trigger frame;
FIG. 3 is a block diagram showing an exemplary configuration of a part of a station (STA);
FIG. 4 is a block diagram showing an exemplary configuration of a part of an access point (AP);
FIG. 5 is a block diagram showing an exemplary configuration of the STA;
FIG. 6 is a block diagram showing an exemplary configuration of the AP;
FIG. 7 is a diagram showing an example of a Relay operation;
FIG. 8 is a diagram showing an example of a Relay operation;
FIG. 9 is a diagram showing an example of a Relay operation;
FIG. 10 is a diagram showing an example of a Relay operation;
FIG. 11 is a diagram showing an example of a Relay operation;
FIG. 12 is a diagram showing an example of a Relay operation;
FIG. 13 is a diagram showing an example of a format of Trigger Dependent User Info;
FIG. 14 is a diagram showing an example of a format of an MU-RTS TXS Trigger frame;
FIG. 15 is a diagram showing an example of a format of Special User Info and User Info;
FIG. 16 is a diagram showing an example of a format of User Info;
FIG. 17 is a diagram showing an example of a format of a Relay Control element;
FIG. 18 is a diagram showing an example of a format of a Relay Control element;
FIG. 19 is a diagram showing an example of a Relay operation;
FIG. 20 is a diagram showing an example of a Relay operation;
FIG. 21 is a diagram showing an example of a format of a Relay Control element;
FIG. 22 is a diagram showing an example of a Relay operation;
FIG. 23 is a diagram showing an example of a Relay operation;
FIG. 24 is a diagram showing an example of a format of a Relay Control element;
FIG. 25 is a diagram showing an example of a Relay operation;
FIG. 26 is a diagram showing an example of a format of a trigger frame;
FIG. 27 is a diagram showing an example of a format of User Info;
FIG. 28 is a diagram showing an example of a Relay operation;
FIG. 29 is a diagram showing an example of a format of a Relay Control element;
FIG. 30 is a diagram showing an example of a Relay operation;
FIG. 31 is a diagram showing an example of a Relay operation;
FIG. 32 is a diagram showing an example of a Relay operation;
FIG. 33 is a diagram showing an example of a Relay operation;
FIG. 34 is a diagram showing an example of a Relay operation;
FIG. 35 is a diagram showing an example of a format of a Relay Control element;
FIG. 36 is a diagram showing an example of a Relay operation;
FIG. 37 is a diagram showing an example of a Relay operation;
FIG. 38 is a diagram showing an example of a Relay operation;
FIG. 39 is a diagram showing an example of a format of User Info; and
FIG. 40 is a diagram showing an example of a format of a Relay Control element.

### Description of Embodiments

Hereinafter, an embodiment of the present disclosure will be described in detail with reference to the drawings.

In UHR, low latency is required. In addition, as a use case of UHR, for example, use in a factory or a warehouse has been studied (for example, see Non-Patent Literature (herein, referred to as "NPL") 1).

In the factory or the warehouse, which is one of the use cases of UHR, there may be a number of places where radio waves do not reach due to obstructions by apparatuses, shelves, or the like. In addition, in the factory or the warehouse, there are numerous noises (interference waves), and the reach range of radio waves may be narrow. The application of a relay (for example, relay control) is one method of expanding the communication range.

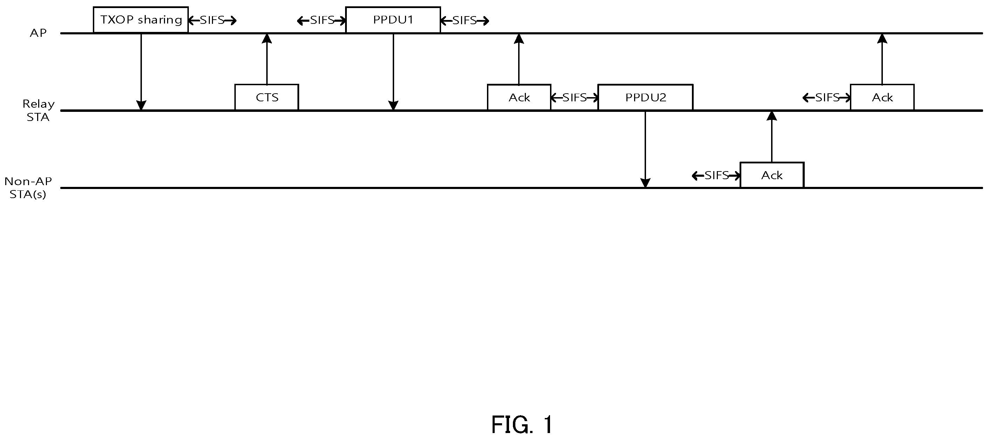

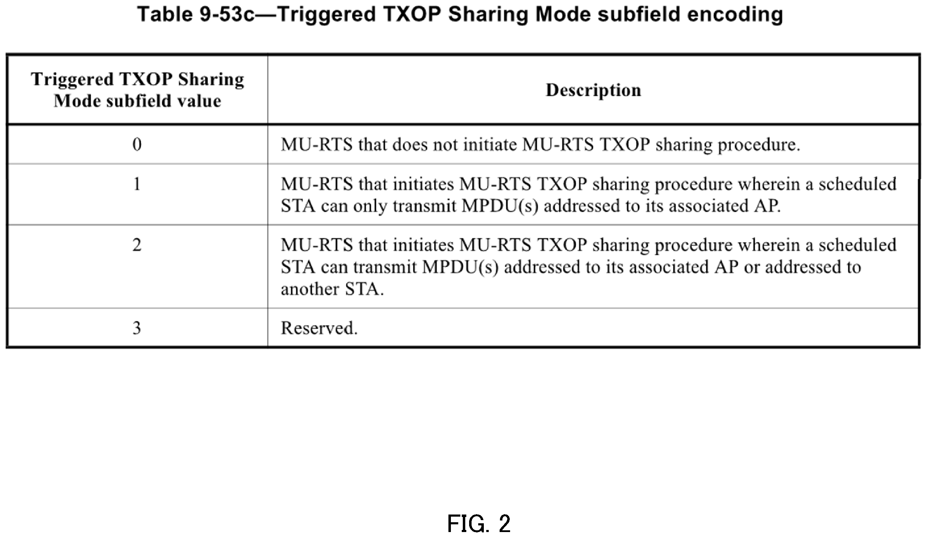

As an example of a downlink (DL) transmission method using the relay (relaying), an application of Triggered Transmission Opportunity (TXOP) sharing shown in FIG. 1 is proposed (for example, see NPL 2). Note that the Triggered TXOP sharing is designated by, for example, a "Triggered TXOP Sharing Mode subfield" in a Common Info field of a Multi User (MU)-Request to Send (RTS) Trigger frame shown in FIG. 2 (for example, see NPL 3).

For example, NPL 2 discloses an exemplary operation that is performed via an STA (hereinafter referred to as a "relay STA") that relays DL transmission from an access point (also referred to as a "base station," hereinafter referred to as "Access Point (AP)") to a terminal (also referred to as a "Station (STA)" or "non-AP STA," hereinafter referred to as "STA").

NPL 2 discloses the relay of the DL transmission from the AP to the STA, but does not disclose a relay method for an uplink (UL) transmission from the STA to the AP.

In a non-limiting example of the present disclosure, a method of improving the efficiency of the relay transmission in the UL transmission will be described.

### [Configuration of Wireless Communication System]

The wireless communication system according to one exemplary embodiment of the present disclosure may include, for example, at least one AP 200 and a plurality of STAs 100 (or may include an AP). For example, STA 100 and AP 200 perform relay communication or control of the relay communication.

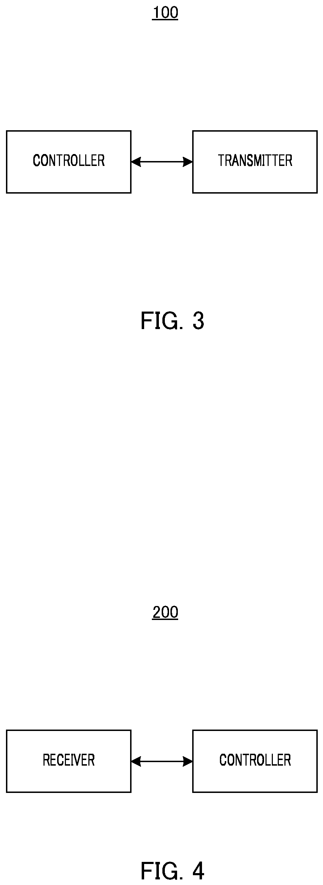

FIG. 3 is a block diagram showing an exemplary configuration of a part of STA 100 according to one exemplary embodiment of the present disclosure. In STA 100 shown in FIG. 3, a controller (for example, corresponding to control circuitry) controls a relay operation for another terminal (relay destination STA described later) that performs the uplink transmission based on control information from AP 200. A transmitter (for example, corresponding to transmission circuitry) transmits (for example, forwards) a signal of the uplink transmission from the other terminal to AP 200.

FIG. 4 is a block diagram showing an exemplary configuration of a part of AP 200 according to one exemplary embodiment of the present disclosure. In AP 200 shown in FIG. 4, the relay operation for at least one of a first terminal that performs the uplink transmission (for example, the relay destination STA described later) and a second terminal that relays the uplink transmission (for example, the relay STA described later) is controlled. A receiver (for example, reception circuitry) receives a signal of the uplink transmission.

### [Exemplary Configuration of STA 100]

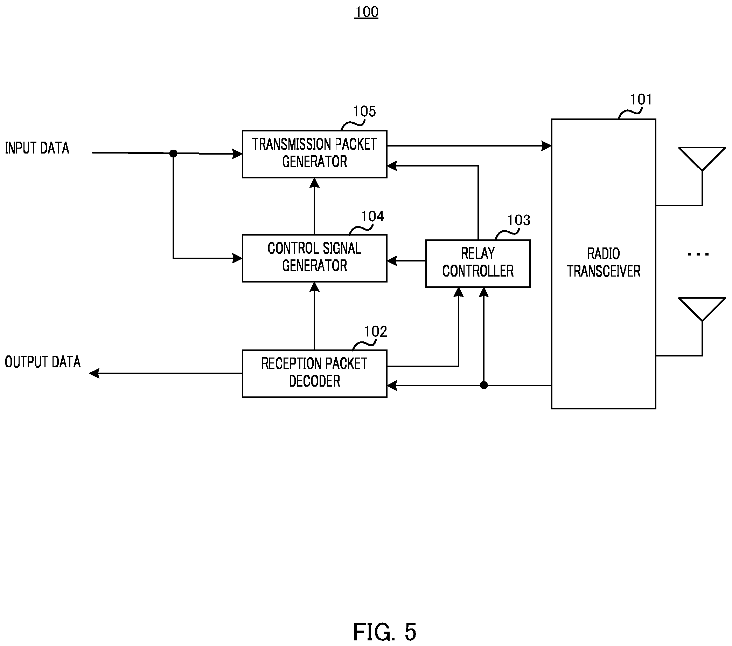

FIG. 5 is a block diagram showing an exemplary configuration of STA 100.

STA 100 shown in FIG. 5 may include, for example, radio transceiver 101, reception packet decoder 102, Relay controller 103, control signal generator 104, and transmission packet generator 105.

Note that at least one of reception packet decoder 102, Relay controller 103, control signal generator 104, and transmission packet generator 105 shown in FIG. 5 may be included in the controller shown in FIG. 3, and radio transceiver 101 shown in FIG. 5 may be included in the transmitter shown in FIG. 3.

In addition, STA 100 may be any of a station that performs the relay (hereinafter, referred to as a "relay STA") or relay destination station (hereinafter, referred to as a "relay destination STA"). In this case, both the relay STA and relay destination STA may include the configuration shown in FIG. 5. In addition, for example, the relay destination STA may have a configuration in which Relay controller 103 is not provided among the configurations shown in FIG. 5.

In FIG. 5, radio transceiver 101 receives a radio signal via an antenna and performs radio reception processing on the reception signal. Radio transceiver 101 outputs the reception signal (reception packet) after the radio reception processing to reception packet decoder 102 and Relay controller 103. In addition, radio transceiver 101 performs radio transmission processing on the transmission packet input from transmission packet generator 105 and transmits a signal (for example, a radio signal) after the radio transmission processing via the antenna.

Reception packet decoder 102 decodes the reception packet input from radio transceiver 101, outputs decoded data (for example, output data), and outputs the decoded control information to Relay controller 103 and control signal generator 104.

Relay controller 103 controls the Relay operation based on the reception packet input from radio transceiver 101 and the control information input from reception packet decoder 102. An example of the relay control in Relay controller 103 will be described later. Relay controller 103 outputs information (for example, referred to as "Relay control information") related to the relay control to control signal generator 104 and transmission packet generator 105.

Control signal generator 104 generates a control signal based on at least one of, for example, input data, the control information input from reception packet decoder 102, the Relay control information input from Relay controller 103, and an internal state of STA 100, and outputs the control signal to transmission packet generator 105.

Transmission packet generator 105 generates a transmission packet based on at least one of the input data, the Relay control information input from Relay controller 103, and the control signal input from control signal generator 104, and outputs the generated transmission packet to radio transceiver 101.

### [Exemplary Configuration of AP 200]

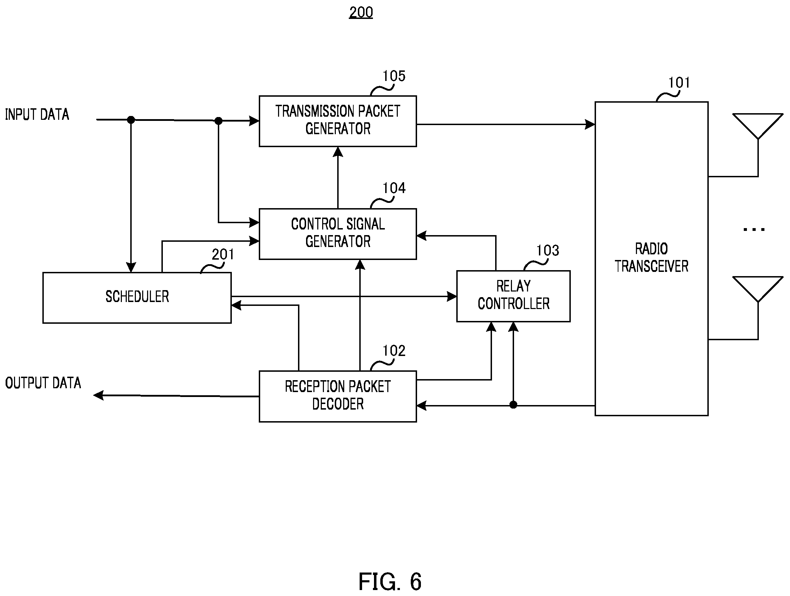

FIG. 6 is a block diagram showing an exemplary configuration of AP 200. AP 200 may have, for example, a configuration in which scheduler 201 is added to the configuration of STA 100 shown in FIG. 5.

Note that at least one of scheduler 201, reception packet decoder 102, Relay controller 103, control signal generator 104, or transmission packet generator 105 shown in FIG. 6 may be included in the controller shown in FIG. 4, and radio transceiver 101 shown in FIG. 6 may be included in the receiver shown in FIG. 4.

In FIG. 6, scheduler 201 performs scheduling for STA 100 based on, for example, at least one of the input data, the control information input from reception packet decoder 102, or an internal state of AP 200. Scheduler 201 outputs information related to, for example, control of the transmission packet generation in transmission packet generator 105 and the relay control in Relay controller 103 to Relay controller 103 and control signal generator 104.

The exemplary configurations of STA 100 and AP 200 have been described above.

For example, STA 100 may be a relay communication apparatus (for example, also referred to as a relay STA or a relay device). In addition, another STA 100 may be a communication terminal (for example, also referred to as "relay destination STA") that communicates with AP 200 via the relay communication apparatus. In addition, AP 200 may be, for example, an "AP communication apparatus" that communicates with the communication terminal via the relay communication apparatus.

In another example, AP 200 may be a relay communication apparatus. In addition, STA 100 may be a communication terminal that communicates with another AP 200 via the relay communication apparatus. In addition, another AP 200 may be an AP communication apparatus that communicates with the communication terminal via the relay apparatus. Here, the AP communication apparatus and AP 200 that is the relay communication apparatus may form (or participate in) a group of APs (for example, also referred to as an AP coordination group, a seamless roaming AP group, a mobility domain, a Single Mobility Domain AP Multi-Link Device (SMD AP MLD), a mesh group, and the like) by executing a setup procedure. AP 200 belonging to the group of APs may share information related to STA 100 with each other. Note that the information related to STA 100 may include, for example, information related to association (association ID (AID)), information related to security (for example, status information or context information), information related to traffic (transmission/reception data) (for example, traffic identifier (TID) or buffer status), or measurement information (for example, signal strength/quality of a serving AP and a neighbor AP) in STA 100.

In another example, the relay communication apparatus may have a configuration in which both the function of STA 100 (for example, FIG. 5) and the function of AP 200 (for example, FIG. 6) are provided. The function of STA 100 provided in the relay communication apparatus is referred to as a "logical STA," and the function of AP 200 provided in the relay communication apparatus is referred to as a "logical AP." For example, the relay communication between the AP communication apparatus and the communication terminal may be realized by the logical STA communicating with another AP 200 (for example, the AP communication apparatus) and the logical AP communicating with another STA 100 (for example, the communication terminal). The logical AP may form (or participate in) a group of APs with another AP. In addition, the relay communication apparatus may include, for example, a relay control function. The relay control function exchanges, for example, transmission/reception data and control information for the relay between the function (logical STA) of STA 100 and the function (logical AP) of AP 200. For example, the relay control function may be a part of a medium access control (MAC) function. Alternatively, the relay control function may exchange the transmission/reception data by connecting to the logical STA and the logical AP via a MAC service access point (SAP) and may exchange the control information by connecting to the logical STA and the logical AP via a MAC sublayer management entity (MLME) SAP. The relay control function may be referred to as a higher layer (for example, higher layer or upper layer) or a station management entity (SME).

In addition, communication between the communication apparatus and the communication terminal via the relay communication apparatus may be referred to as "relay communication." In addition, the relay communication apparatus may have a configuration in which the relay communication is performed and communication different from the relay communication is not performed, may have a configuration in which the communication with at least one of the AP communication apparatus and another STA and the relay communication are performed in a switching manner, or may have a configuration in which the communication with at least one of the AP communication apparatus or another STA and the relay communication are performed in a multiplexed manner.

Hereinafter, examples (for example, methods 1 to 10) of methods for the relay communication and the relay communication control by STA 100 and AP 200 will be described.

Note that, in the following description, as an example, an example of the relay communication in AP 200 (for example, represented as AP) and two STAs 100 (for example, represented as STA1 and STA2) will be described. For example, STA1 is a "relay STA," STA2 is a "relay destination STA," and STA1 relays the UL communication between STA2 and the AP.

### (Method 1)

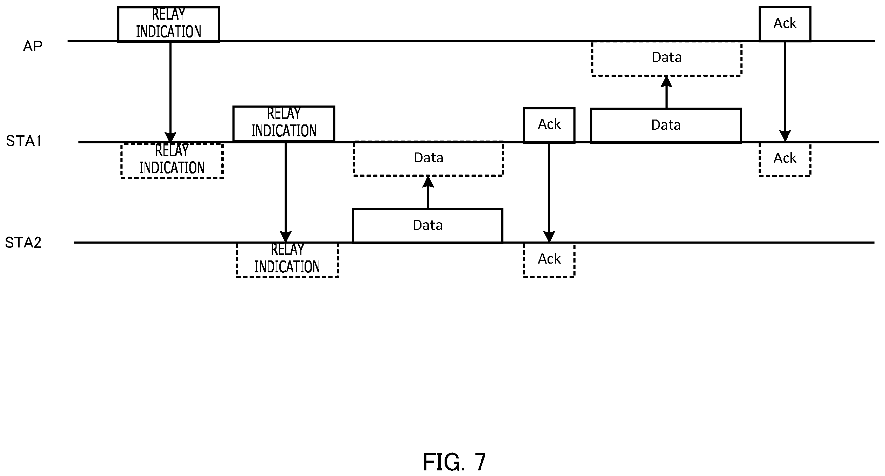

FIG. 7 shows an example of the relay communication according to method 1.

In FIG. 7, STA1 (relay STA) and STA2 (relay destination STA) are associated with (or connected to) the AP, and STA1 (relay STA) relays (or forwards and transmits) the UL data from STA2 (relay destination STA) to the AP in response to the Relay indication of the AP.

Note that, in the Relay operation, as an identifier for identifying the STAs (for example, the relay STA and the relay destination STA), in a case where the relay destination STA is associated with the transmission source AP of the Relay indication, the AID may be assigned by the transmission source AP, and in a case where the relay destination STA is not associated with the transmission source AP of the Relay indication, an identifier (for example, Unassociated STA Identifier (USID)) for identifying the unassociated STA may be assigned.

In addition, for example, in a case where the relay destination STA is associated with an AP different from the transmission source AP of the Relay indication, the AID may be assigned to the relay destination STA by the AP with which the relay destination STA is associated.

Examples of the case where the relay destination STA is associated with an AP different from the transmission source AP include a case where the relay STA includes the functions of STA 100 and AP 200 and the relay destination STA is associated with the relay STA. In this case, the relay STA as the role of AP 200 may assign the AID to the relay destination STA associated with the relay STA.

As described above, in a case where the AID is assigned from an AP (for example, including a case of the relay STA (for example, having the role of AP 200)) different from the transmission source AP as the identifier of the relay destination STA, the AP different from the transmission source AP may negotiate with the transmission source AP so as to assign the relay destination STA an AID that does not duplicate that of any other STA 100.

In addition, in a case where a plurality of STAs 100 under AP 200 are involved in the Relay operation, in addition to the AID, an identifier (for example, BSSID or BSS color) indicating AP 200 with which the STAs are associated or the basic service set (BSS) to which STAs 100 belong may be used in combination.

In addition, the identifier for identifying the relay STA may be assigned by the same procedure as that for the relay destination STA. For example, in a case where the relay STA is associated with the transmission source AP of the Relay indication, the transmission source AP may assign the AID to the relay STA, and in a case where the relay STA is not associated with the transmission source AP of the Relay indication, the transmission source AP may assign the USID to the relay STA. In addition, in a case where the relay STA is associated with an AP different from the transmission source AP of the Relay indication, the AP associated with the relay STA may assign the AID to the relay STA. Alternatively, an ID for indicating the relay STA may be defined separately from the AID.

The "Relay indication" shown in FIG. 7 is a frame (or control information) transmitted to request (or solicit or prompt) the relay destination STA to transmit data. The Relay indication frame may be, for example, a trigger frame, a new Control frame (for example, referred to as a "Relay Control frame"), or a frame in which at least one of the AP and the relay STA requests the relay destination STA to transmit data based on a Reverse Direction protocol instead of the Relay indication.

In a case where the Relay indication frame is the trigger frame, for example, a "relay trigger frame" may be defined and used as a variant for relay control of the trigger frame, an existing trigger frame (for example, a Basic Trigger frame or an MU-RTS trigger frame) may be used, or a frame obtained by extending the existing trigger frame may be used.

In FIG. 7, the AP transmits the Relay indication (control information) related to the Relay operation for at least one of STA1 (relay STA) or STA2 (relay destination STA).

In a case where STA1 (relay STA) receives the Relay indication transmitted by the AP, STA1 may forward the Relay indication to STA2 (relay destination STA). Note that, in FIG. 7, an exemplary operation is shown in which STA1 forwards the Relay indication to STA2, but the AP may directly transmit the Relay indication to STA2. In this case, STA1 may not forward the Relay indication.

In a case where STA2 (relay destination STA) receives the Relay indication from the relay STA or the AP, STA2 transmits the UL data (Data) to the AP. Note that, in a case where STA2 does not hold the UL data, STA2 may transmit a QoS Null frame as the UL response.

In a case where STA1 (relay STA) receives the UL data from STA2, STA1 transmits a response signal (for example, Ack) to STA2. In addition, STA1 forwards (or relays) the UL data from STA2 to the AP.

In a case where the AP receives the UL data from STA1, the AP transmits the response signal (for example, Ack) to STA1.

In this way, the AP controls the Relay operation for the relay destination STA that performs the UL transmission and the relay STA that relays the UL transmission. For example, the AP may transmit the Relay indication related to the Relay operation for the relay STA and the relay destination STA, and the relay STA may forward the Relay indication to the relay destination STA. Then, the relay destination STA transmits the UL data to the AP, and the relay STA relays the UL data based on the Relay indication transmitted by the AP, so that the UL transmission using the relay can be performed.

Note that, in FIG. 7, the Relay indication may include, for example, information related to an interval (for example, a TXOP interval, hereinafter, referred to as a "Relay transmission interval") in which data or control information related to the relay can be transmitted. The AP may perform an operation of waiting for reception from the relay STA in the Relay transmission interval, may permit the data transmission after receiving the data from the relay STA in the Relay transmission interval, or may control whether or not to permit the data transmission according to the data type received from the relay STA. In addition, the AP that is a TXOP holder may regain the transmission right and perform the transmission to another STA in a case where the signal is not detected for a specified time after the Relay indication is transmitted. Note that the specified time may be, for example, a period longer than a short interframe space (SIFS) (for example, PIFS or DIFS).

In addition, for example, the IFS in the sequence after the reception of the Relay indication (for example, in the Relay transmission interval) may be set to SIFS.

In addition, STA1 (relay STA) may store the data received from STA2 (relay destination STA) and may retransmit the data to the AP in a case where, for example, the transmission to the AP fails.

### <Encryption and Decryption>

In addition, in the example of the Relay operation shown in FIG. 7, the following encryption and decryption may be applied to the transmission data (data) transmitted from STA2 (relay destination STA) to the AP via STA1 (relay STA). For example, the processing of encrypting or decrypting the signal of the UL transmission may be different between a case where the Relay operation is performed and a case where the Relay operation is not performed.

For example, information (for example, a value of an Address field included in the MAC header information) used for the encryption by the relay destination STA (transmission side) may be replaced with "MAC header information used in a case where the relay STA transmits the frame to the AP" from the value of the MAC header of the actual transmission frame. As a result, the AP (reception side) can decrypt the encrypted data.

In addition, for example, the AP may change information used for the decryption of the encrypted data instead of replacement with the information used for the encryption by the relay destination STA. For example, the relay destination STA encrypts the data using the MAC header of the actual transmission frame. With respect to the MAC header information (for example, the value of the Address field) used for the decryption of the encrypted data, the AP may replace the MAC header of the actual reception frame with "MAC header information used in a case where the relay destination STA transmits the frame to the relay STA."

In addition, for example, the operation of the relay STA may be changed instead of replacing the information used for the encryption by the relay destination STA. For example, the relay destination STA sets the MAC header information (for example, a value of an Address field) to "MAC header information used in a case where the relay destination STA transmits the frame to the AP." The relay STA may forward data in which the "transmission-side address is the relay destination STA and the reception-side address is the AP" in the Address field of the MAC header within the Relay transmission interval designated by the Relay indication.

In addition, for example, the relay STA may transmit the encapsulated data instead of replacing the information used for the encryption by the relay destination STA. For example, the relay STA may constitute a frame for direct transmission to the AP and may encapsulate the entire frame (for example, a signal including a header) received from the relay destination STA in the payload of the data frame. The AP may recognize that the reception data in the Relay transmission interval designated by the Relay indication is the relay frame and may decrypt the frame extracted from the payload as "a frame directly transmitted from the transmission source (STA)."

The encryption and decryption of the transmission data have been described above.

Note that the case where the transmission data is transmitted from the relay destination STA to the AP via the relay STA (for example, UL communication) has been described, but the present disclosure is not limited to this, and the above-described relay communication may be applied to, for example, a case where the transmission data is transmitted from the AP to the relay destination STA via the relay STA (for example, DL communication). In this case, the operation may be performed in which the above-described "relay destination STA" is replaced with the "AP" and the "AP" is replaced with the "relay destination STA."

In addition, in FIG. 7, a case where the relay STA transmits the Ack immediately after receiving the data from the relay destination STA has been described, but the present disclosure is not limited to this, and for example, the relay STA may transmit the Ack to the relay destination STA after receiving the Ack from the AP. As a result, the relay destination STA can determine that the AP has successfully received the data by receiving the Ack from the relay STA.

In addition, in the Relay operation example shown in FIG. 7, the data (Data) transmitted from the relay destination STA to the AP via the relay STA may be controlled as follows. For example, the transmission control of the UL transmission may be different between a case where the Relay operation is performed and a case where the Relay operation is not performed.

For example, the relay destination STA may set (or limit) the amount of transmission data in the Relay operation to the amount of data that can be transmitted in the Relay transmission interval designated by the Relay indication of the AP.

In addition, for example, the relay STA may forward the data from the relay destination STA in a case where the data can be transmitted in the Relay transmission interval, and may not forward the data in a case where the data cannot be transmitted.

In addition, for example, the relay STA may forward the data (for example, a part of data of an Aggregate MAC Service Sata Unit (A-MSDU)) that can be transmitted in the Relay transmission interval and may not forward the data that cannot be transmitted.

As a result, in the Relay operation, the data can be transmitted in the Relay transmission interval. In addition, by performing the data transmission in the Relay transmission interval, the time from the transmission by the relay destination STA to the reception by the AP can be shortened, and the transmission with low latency can be performed.

Note that, for example, the AP may designate whether or not to transmit the data in the Relay transmission interval by the Relay indication (or a Relay Control element described later), or may designate the type (for example, access category (AC) or TID) of the data transmitted by the relay destination STA. As a result, the AP can control the data to be transmitted by the relay, such as prioritizing data required to be transmitted with low latency.

In the exemplary Relay operation shown in FIG. 7, in a case where the relay STA (STA1) does not perform the data transmission in the Relay transmission interval, the relay STA may notify the AP of the reception state (for example, reception success or reception failure) from the relay destination STA (STA2) to the relay STA. Note that the reception failure may include the transmission failure of the relay destination STA (for example, a case where the transmission is not possible due to carrier sense). In addition, the transmitting Relay indication to the relay destination STA, the relay STA may determine that the transmission of the relay destination STA has failed in a case where no signal from the relay destination STA is received within a specified time (for example, an SIFS interval).

As a notification method of the reception state, for example, a "Relay State frame" may be defined, and the relay STA may transmit the Relay State frame to the AP. In addition, instead of the Relay State frame, the relay STA may transmit, for example, at least one of Ack or NDP.

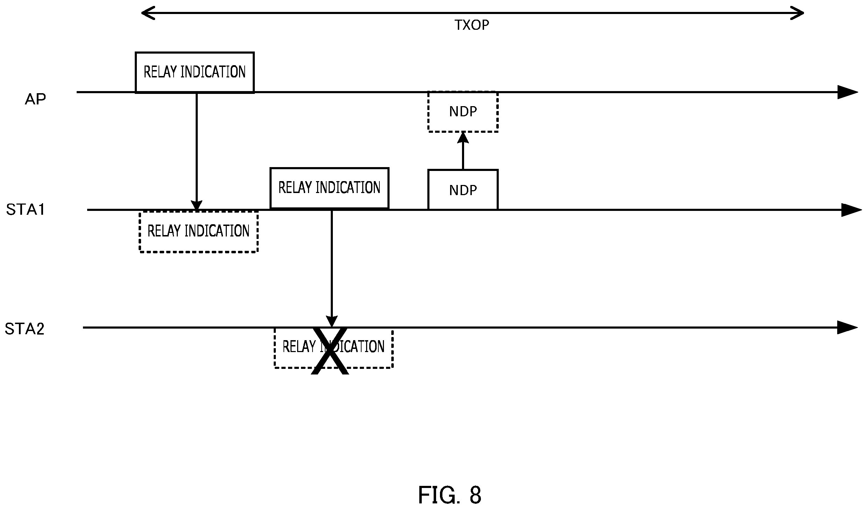

For example, as shown in FIG. 8, after transmitting the Relay indication to the relay destination STA (STA2), the relay STA(STA1) may determine the reception state as a failure in a case where no signal from the relay destination STA is detected for a period longer than the SIFS (for example, PIFS or DIFS), and may transmit the NDP to the AP. The AP may determine that "reception state = failure" in a case where the NDP is received after the Relay indication is transmitted.

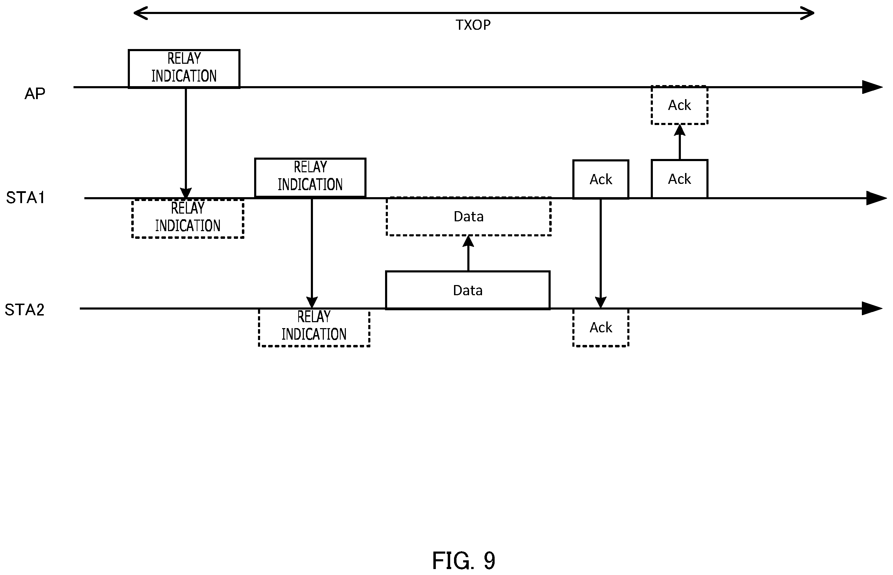

In addition, for example, as shown in FIG. 9, after transmitting the Relay indication is transmitted to the relay destination STA (STA2), the relay STA (STA1) may transmit the Ack indicating "reception state = success" to the AP in addition to the Ack to the relay destination STA in a case where the data is received from the relay destination STA in an SIFS interval (or an interval shorter than PIFS or DIFS). The AP may determine that "reception state = success" in a case where the Ack is received after the Relay indication is transmitted. Note that the relay STA may not transmit the Ack to the AP. In this case, the AP may receive the Ack transmitted from the relay STA to the relay destination STA and determine that "reception state = success." For example, by not transmitting the Ack to the AP shown in FIG. 9, the throughput can be improved by reducing the transmission of the Ack.

As described above, in a case where the data is not transmitted in the Relay transmission interval, the relay STA may notify the AP of the reception state, and the AP may control the subsequent operation as follows.

For example, in a case where it is determined that "reception state = success," the AP may perform a transmission request (or a forwarding request) to the relay STA. The relay STA may transmit, for example, the data (Data) from the relay destination STA shown in FIG. 9 to the AP in response to the transmission request from the AP. In addition, for example, in a case where it is determined that "reception state = failure," the AP may retransmit the Relay indication to the relay originating STA (for example, the operation shown in FIG. 7). As a result, the data transmission from the relay originating STA to the relay STA is not required in a case where "reception state = success," and the throughput can be improved.

In addition, for example, after receiving the Ack or the NDP from the relay STA, the AP may perform the transmission to another STA or the like if it is possible within the Relay transmission interval. As a result, the throughput can be improved.

Note that, in a case where the relay destination STA does not hold the UL data, the relay destination STA may transmit a QoS Null frame as the UL response. As a result, it is possible to prevent an operation of "not responding because there is no data to be transmitted."

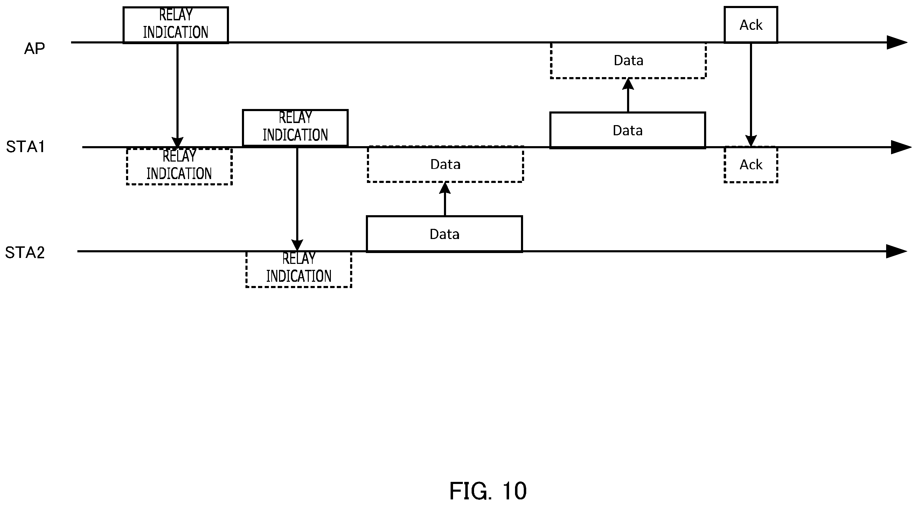

In addition, in the Relay operation example shown in FIG. 7, the operation has been described in which the relay STA (STA1) transmits the Ack in response to the data transmission of the relay destination STA (STA2), but the present disclosure is not limited to this, and for example, as shown in FIG. 10, the relay STA may not transmit the Ack. In this case, the relay destination STA may determine that the relay STA has successfully received the data in a case where the relay STA transmits the data (data to be forwarded to the AP) after the data transmission and after a specified time has elapsed (for example, after the SIFS interval). Note that, in a case where the data transmitted by the relay STA is the same as the data transmitted by the relay destination STA or in a case of the Ack or the NDP transmitted to the AP, the relay destination STA may determine that the relay STA has successfully received the data.

In addition, whether or not transmission of the Ack by the relay STA is required may be determined (or instructed) by the AP or the relay STA, or may be defined in the specification. For example, the AP may notify (or control) via the Relay indication whether or not transmission of the Ack by the relay STA is required (for example, whether or not the relay STA transmits the response signal in response to the UL data from the relay destination STA), or the relay STA may determine whether or not transmission of the Ack by the relay STA is required, based on the type of the relay destination STA (for example, corresponding or not corresponding to the Relay operation of method 1 (for example, legacy terminal)).

As a result, the throughput can be improved by reducing the transmission of the Ack.

### (Method 2)

In method 2, a case where the Relay indication shown in the exemplary operation of method 1 is included in the "MU-RTS Trigger frame" will be described.

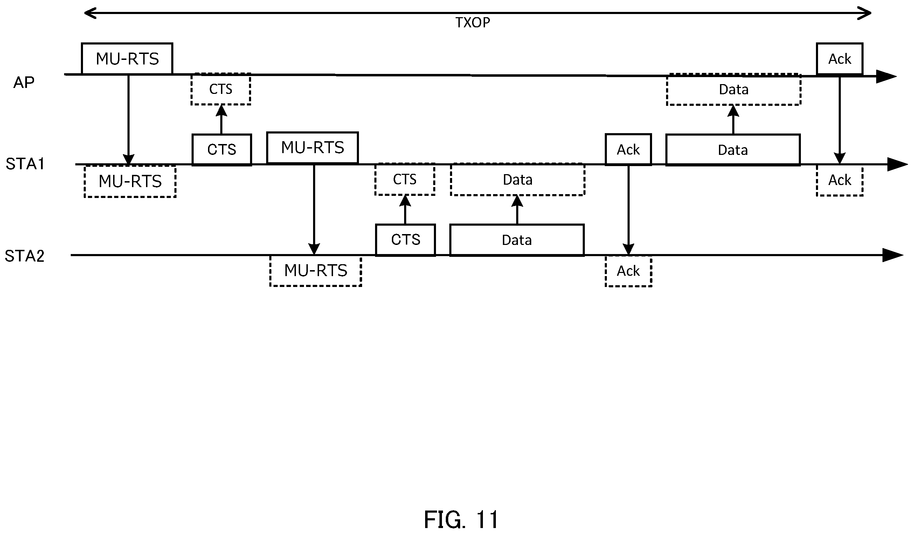

FIG. 11 shows an exemplary operation in a case where the Relay indication is included in the MU-RTS Trigger frame.

In FIG. 11, the AP may include, in the MU-RTS Trigger frame (represented as MU-RTS) transmitted to the relay STA (STA1), the control information (for example, the Relay indication) related to the Relay operation, such as designation of the Relay operation and the ID of the relay STA (STA1) and the ID of the relay destination STA (STA2).

For example, as an example of the designation of the Relay operation, the designation of the Relay operation may be defined by using "Reserved" (for example, value = 3) in the Triggered TXOP Sharing Mode subfield of the Common Info field of the MU-RTS Trigger frame shown in FIG. 2.

In addition, as the ID of the relay STA, for example, the AID of the relay STA may be designated by the AID12 of the User Info in the MU-RTS Trigger frame.

In addition, as the ID of the relay destination STA, for example, the ID (for example, AID) of the relay destination STA may be designated by Reserved or Trigger Dependent User Info of the User Info in the MU-RTS Trigger frame. Note that the AID of the relay destination STA may be defined as "Dest AID (or destination AID, destination AID)." In addition, the ID of the relay destination STA may be designated by a plurality of pieces of User Info.

In FIG. 11, STA1 (relay STA) transmits a Clear to Send (CTS) to the AP as a response to the MU-RTS Trigger frame from the AP. STA1 may transmit the CTS to the AP in, for example, by including the CTS in a non-HT or non-HT duplicate Physical (PHY) Protocol Data Unit (PPDU).

In addition, STA1 may forward the MU-RTS Trigger frame to STA2 (relay destination STA) after transmitting the CTS.

Note that the relay STA may change a part of the MU-RTS Trigger frame to be forwarded to the relay destination STA from the MU-RTS Trigger frame received from the AP. For example, the relay STA may change the value of the TXOP Sharing Mode subfield from 3 to 1 or 2, may change the AID12 in the User Info to the Dest AID, or may delete the Dest AID or the Trigger Dependent User Info in the User Info. As a result, since the format of the MU-RTS Trigger frame transmitted to the relay destination STA can be set to be the same as the existing MU-RTS Trigger format, the relay destination STA can perform the existing STA operation.

In addition, the relay STA may forward the User Info in the MU-RTS Trigger frame received from the AP to the relay destination STA as it is, or may change a part (for example, the AID12 in the User Info) and forward the User Info. As a result, in a case where the AID12 in the User Info is the AID of the relay destination STA, the relay destination STA can recognize that it is the relay destination STA, and may perform an operation unique to the relay destination STA (for example, the replacement of the information used for the encryption shown in method 1, or the operation of not transmitting the Ack of the relay STA). In addition, by changing the AID12 in the User Info to the AID of the relay destination STA, the relay destination STA can determine the trigger for the relay destination STA based on the AID12 in the User Info, and can determine that the STA is the relay destination STA in a case where the Dest AID in the User Info is the AID of the relay destination STA.

In addition, in a case where the relay STA forwards the User Info in the MU-RTS Trigger frame received from the AP as it is, the AID of the relay STA may be notified to the relay destination STA in advance. In this case, the relay destination STA may continue the decryption processing in a case where the AID12 in the User Info is the relay STA notified in advance.

In FIG. 11, STA2 (relay destination STA) transmits the CTS to STA1 (relay STA) as a response to the MU-RTS Trigger frame from STA1. STA2 may transmit the CTS to the relay STA by including the CTS in, for example, a non-HT or non-HT duplicate PPDU. STA2 may transmit, for example, the UL data (Data) after transmitting the CTS.

For the subsequent operation in FIG. 11, for example, the transmission and reception of the data, the Ack, and the NDP shown in method 1 may be performed.

As described above, by including the Relay indication in the MU-RTS Trigger frame, the CTS transmission, which is the legacy operation, is performed, and accordingly, for example, the interference effect or the like caused by transmission from a hidden terminal can be reduced.

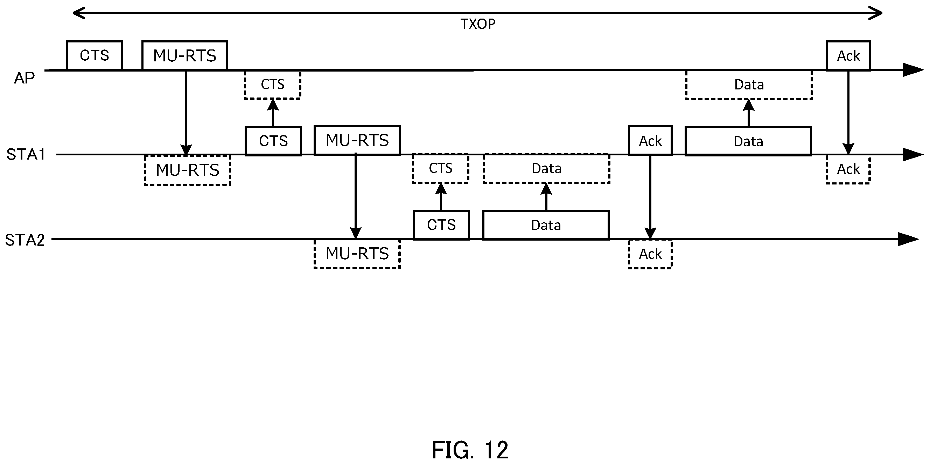

Note that, in the Relay operation using the MU-RTS Trigger frame shown in FIG. 11, the AP may transmit the CTS (for example, "CTS-to-self") before the MU-RTS Trigger frame is transmitted (for example, immediately before the transmission) as shown in FIG. 12. When receiving the CTS-to-self, a legacy STA performs an operation of prohibiting the transmission in the TXOP period. On the contrary, when receiving the CTS-to-self, the relay destination STA may permit the transmission in the TXOP period by the CTS-to-self, for example, in a case where the STA is determined to be the relay destination STA by the MU-RTS Trigger frame received in the TXOP period. In this case, the relay STA may set, for example, the MU-RTS Trigger frame to be transmitted to the relay destination STA to TXOP Sharing Mode subfield = 3 and no designation of the Dest AID in order to determine whether or not STA is the relay destination STA. That is, the relay destination STA can determine that STA is the relay destination STA in a case where the TXOP Sharing Mode subfield = 3 and the Dest AID is not designated. As a result, the Relay operation can be performed even in a case where the AP transmits the CTS-to-self.

### <Exemplary Format>

An exemplary format in method 2 will be described.

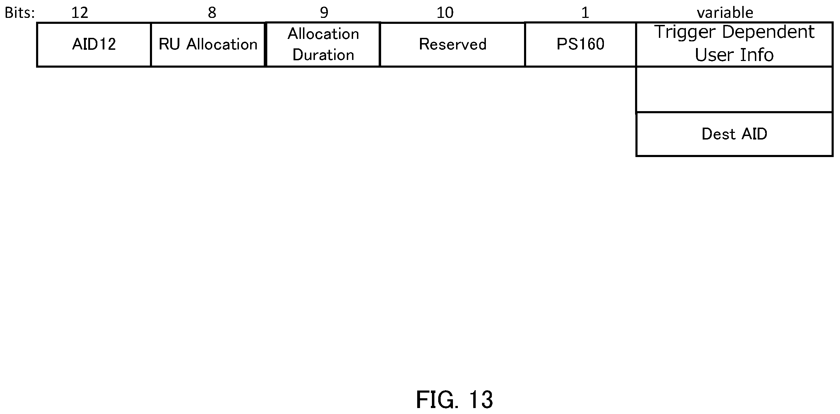

For example, an MU-RTS TXS Trigger frame format (for example, see NPL 3) may be applied to the MU-RTS Trigger frame transmitted from the AP to the relay STA. FIG. 13 shows an exemplary format in which the Dest AID (for example, the AID of the relay destination STA) is designated in the Trigger Dependent User Info included in the User Info of the MU-RTS TXS Trigger frame.

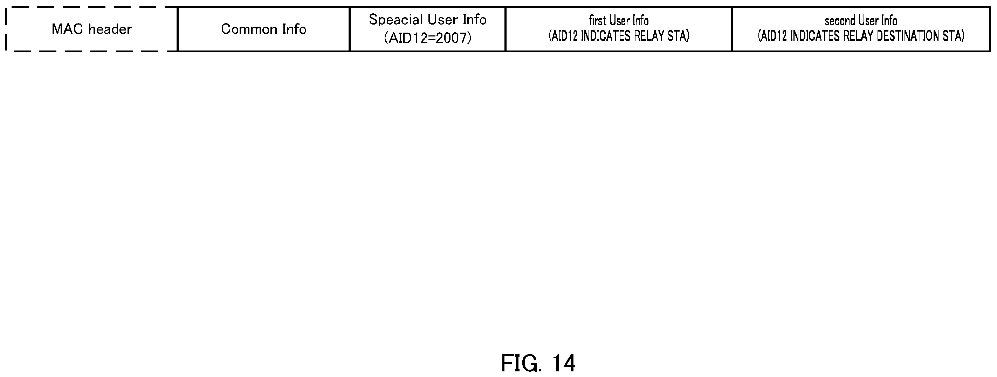

In addition, for example, the Dest AID may be designated by a plurality of pieces of User Info instead of the exemplary format shown in FIG. 13. For example, as shown in FIG. 14, the AID of the relay STA and the AID of the relay destination STA may be designated by the AID12 in each of a plurality (two in the example of FIG. 14) of pieces of User Info by using User Info in addition to the Special User Info.

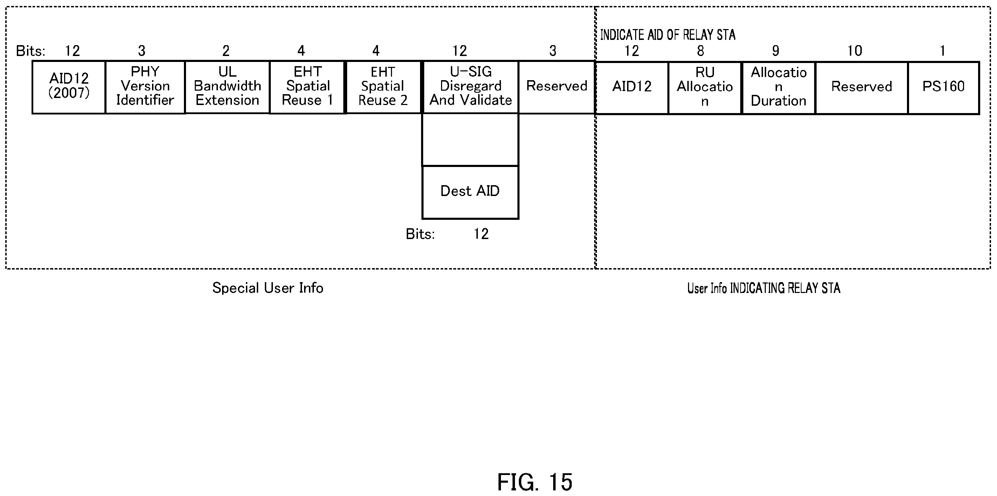

Alternatively, for example, as shown in FIG. 15, in the "U-SIG Disregard And Validate" of the Special User Info, the Dest AID may be designated, and the AID of the relay STA may be designated in the AID12 in the subsequent User Info. Note that, since the U-SIG is also assumed to be received by an STA (for example, including an Overlapped BSS (OBSS) STA) other than the communication partner, it is not preferable that the U-SIG Disregard And Validate is used for other purposes. However, since the CTS responding to the MU-RTS is included and transmitted in the non-HT or non-HT duplicate PPDU including no U-SIG, the U-SIG Disregard And Validate may be used for the relay control.

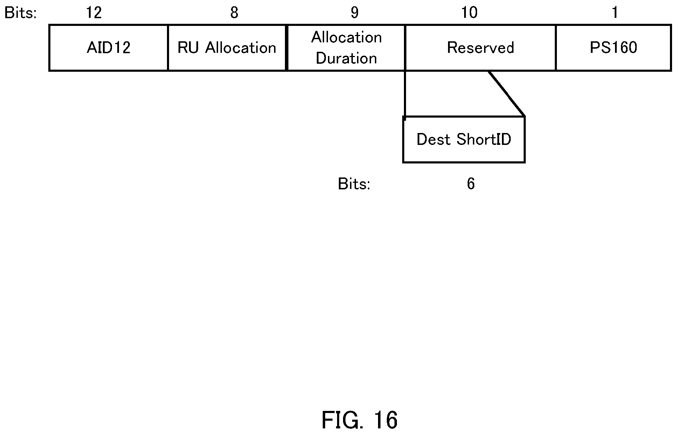

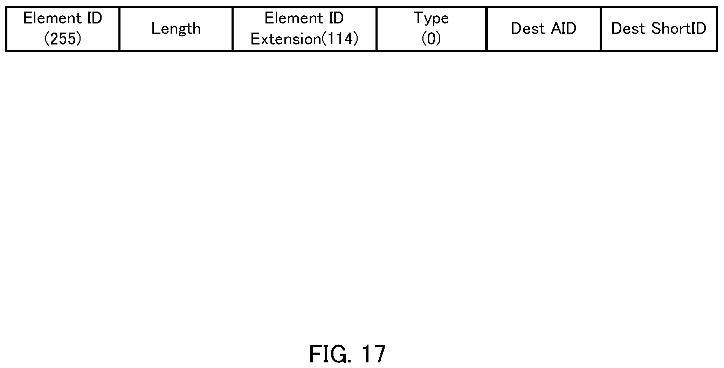

In addition, for example, the AP may notify the relay STA and the relay destination STA of the ID (for example, "Dest ShortID" (for example, 6 bits)) corresponding to the Dest AID in advance. In this case, instead of the exemplary format shown in FIG. 13, the Dest ShortID may be designated by at least a part (6 bits in FIG. 16) of the Reserved of the User Info as shown in FIG. 16. For example, among the values that can be adopted as the AID, the AID of an STA that can be a candidate for the relay destination STA (candidate for the Dest AID) may be associated with the Dest Short ID. Note that a new element (for example, "Relay Control element") may be used for the notification of the Dest AID and the Dest ShortID. FIG. 17 shows an exemplary format of the Relay Control element. For example, as shown in FIG. 17, in the Relay Control element, ElementID = 255 and ElementID Extension = 114 may be configured, and the ID notification in the Relay Control element may be set to Type = 0. In addition, a plurality of sets of the Dest AID and the Dest ShortID may be notified by the Relay Control element.

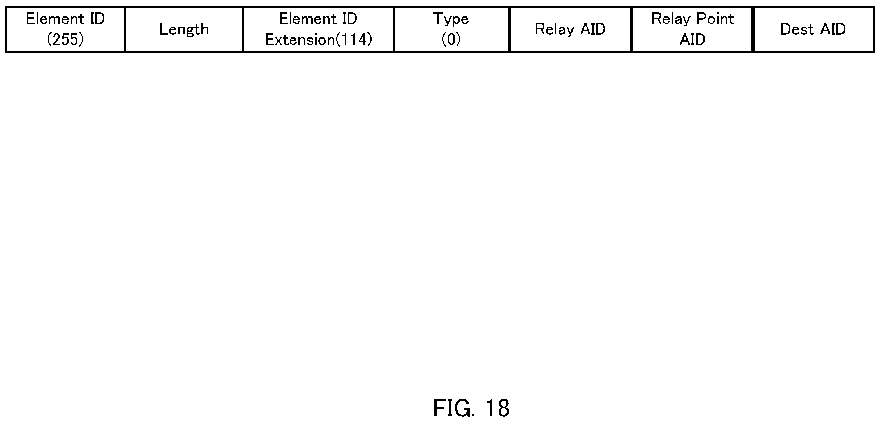

In addition, instead of the exemplary format shown in FIG. 13, the AP may assign an AID (hereinafter, referred to as a "Relay AID") indicating a combination of the relay STA and the relay destination STA in advance, and the Relay Control element may notify the Relay AID to the relay STA and the relay destination STA. FIG. 18 shows an exemplary format of the Relay Control element that notifies the Relay AID, the AID of the relay STA (referred to as a "Relay Point AID"), and the AID of the relay destination STA (Dest AID). In this case, the Relay AID may be designated in the AID12 of the User Info in the MU-RTS TXS Trigger frame transmitted to the relay STA and the relay destination STA. The relay STA continues the decryption in a case where the AID12 in the User Info is the Relay AID in addition to a case where the AID12 in the User Info is the AID of the STA itself. In a case where the AID12 in the User Info is the Relay AID, the relay STA can recognize that the STA itself is the relay STA based on the Relay Control element. In addition, the relay destination STA continues the decryption in a case where the AID12 in the User Info is the Relay AID in addition to a case where the AID12 in the User Info is the AID of the STA itself. In a case where the AID12 in the User Info is the Relay AID, the relay destination STA can recognize that the STA itself is the relay destination STA based on the Relay Control element.

Note that, in the above example, the case where the MU-RTS TXS Trigger frame format is used has been described, but another format different from the MU-RTS TXS Trigger frame format may be applied. For example, a format of the MU-RTS (for example, the trigger in which the "Triggered TXOP Sharing Mode subfield = 0" shown in FIG. 2) may be applied.

### <Notification Method for Relay Control element>

Next, an exemplary operation will be described in which the AP notifies the Relay Control element in advance in the exemplary format described above. Note that, for example, a new frame may be used for the notification of the Relay Control element, or a Beacon may be used. In addition, in a case where the new frame is used, for example, the Relay Control element may be notified in a Relay setup phase, and any of the Relay operations of method 1 or method 2 may be performed in a Relay transmission phase.

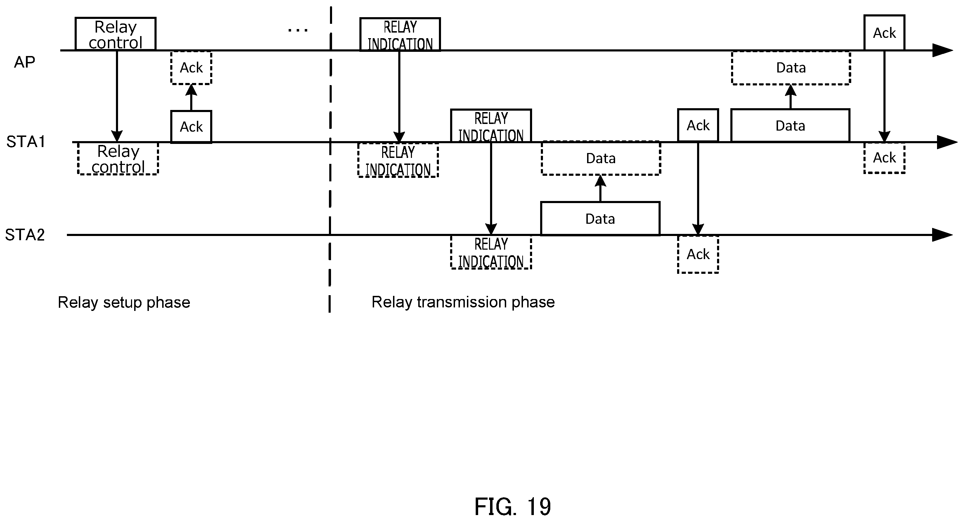

FIG. 19 shows an exemplary operation using a new frame (for example, referred to as a "Relay Control frame"). Note that the Relay Control frame may include the Relay Control element. The AP notifies the Relay Control frame to the relay STA (STA1). For example, in a case where the relay STA receives the Relay Control frame from the AP, the relay STA transmits the Ack to the AP.

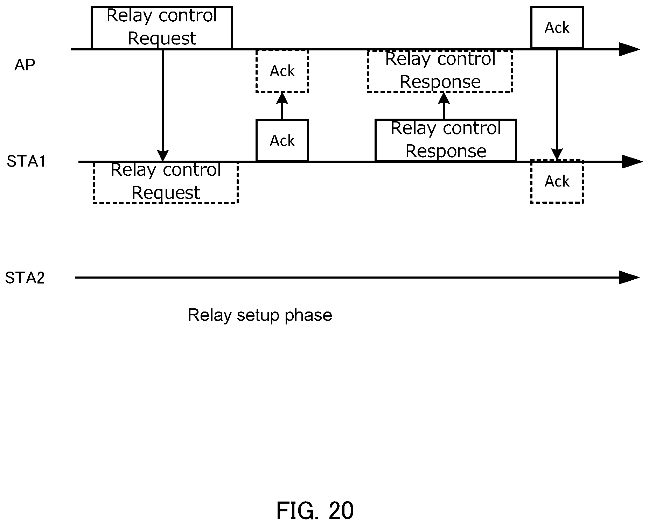

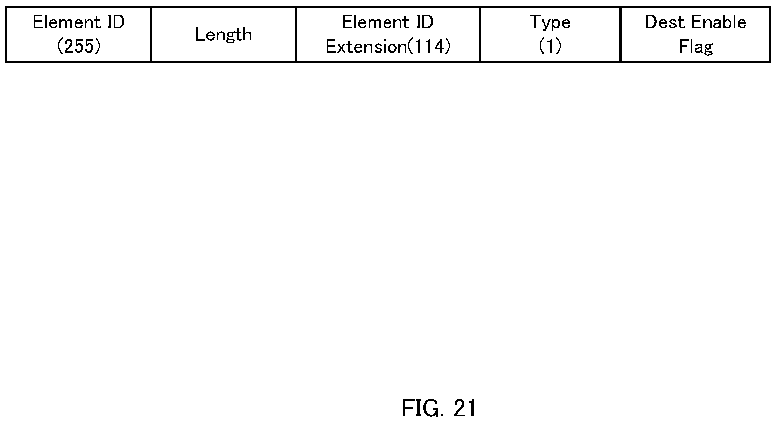

In addition, an exemplary operation (for example, a case of using a "Relay Control Request Frame" and a "Relay Control Response Frame") in which the relay STA returns a response to the AP instead of the Relay Control frame shown in FIG. 19 may be used. FIG. 20 shows an exemplary operation of a Relay setup phase in a case where the relay STA returns a response to the AP. In FIG. 20, for example, the Relay Control element (Type = 0) shown in FIG. 17 or FIG. 18 may be notified in the Relay Control Request Frame, and the Relay Control element (Type = 1) shown in FIG. 21 may be notified in the Relay Control Response Frame. In the Relay Control element shown in FIG. 21, the relay STA may notify the AP of information (for example, Dest Enable Flag = 1) indicating that transmission/reception to/from the relay destination STA is possible, in a case where transmission/reception to/from the relay destination STA is possible, and may notify the AP of information (for example, Dest Enable Flag = 0) indicating that transmission/reception to/from the relay destination STA is not possible, in a case where transmission/reception to/from the relay destination STA is not possible. As a result, the AP may perform the Relay transmission phase on an STA for which the Dest Enable Flag = 1.

Note that, instead of the Dest Enable Flag, for example, a path loss between the relay STA and the relay destination STA may be notified. Note that, in a case where transmission/reception is not possible between the relay STA and the relay destination STA, the path loss may be set to the maximum value. In this case, the AP may perform the Relay transmission phase in which the relay STA is set to an STA having the minimum path loss (excluding the maximum value). As a result, the AP can select the optimal relay STA.

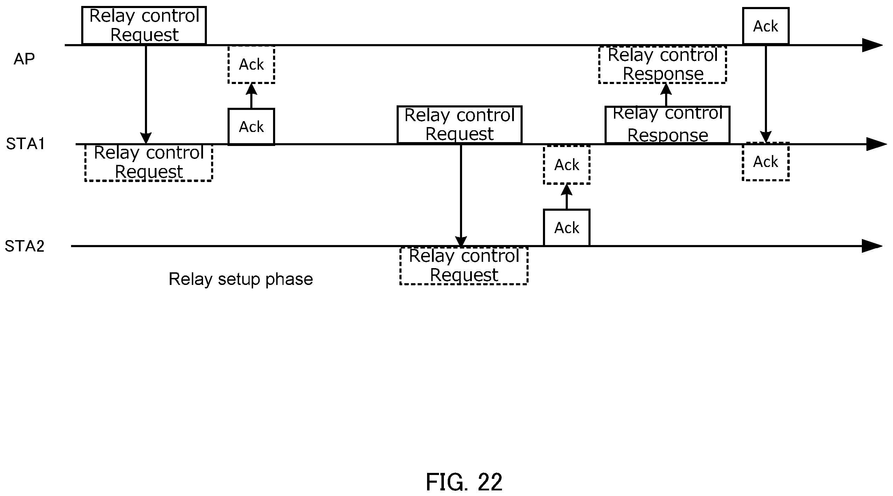

In addition, in a case of a configuration or a state in which the relay destination STA uses the information included in the Relay Control element instead of the Relay setup phase shown in FIG. 20, the relay STA may forward the Relay Control element (Type = 0) to the relay destination STA, for example, as shown in FIG. 22. In this case, when not having received the Ack from the relay destination STA, the relay STA may transmit to the AP a Relay Control Response Frame including a Relay Control element (for example, FIG. 21) in which the Dest Enable Flag = 0 is configured. In addition, for example, in a case of a state where the communication between the relay STA and the relay destination STA is impossible, the relay STA may transmit a Relay Control Response Frame in which the Dest Enable Flag = 0 is set to the AP without forwarding the Relay Control element (Type = 0) to the relay destination STA.

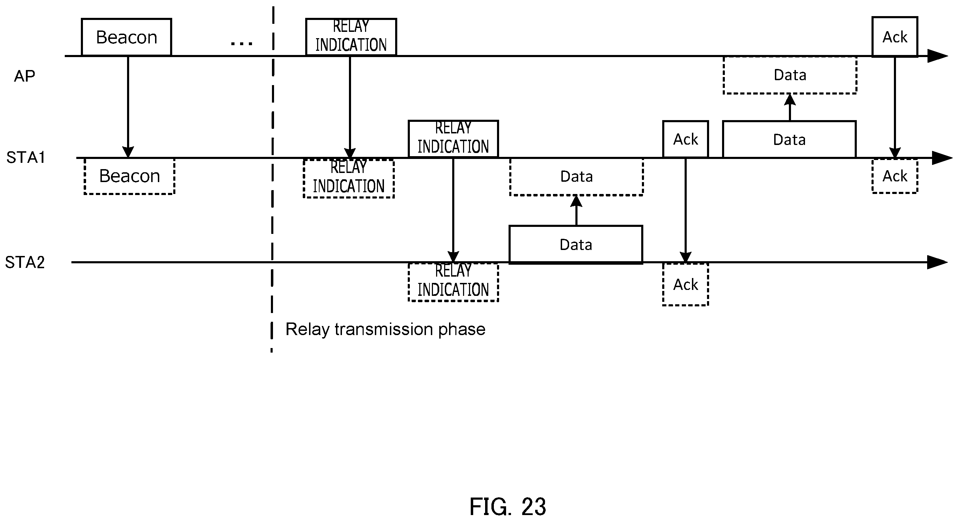

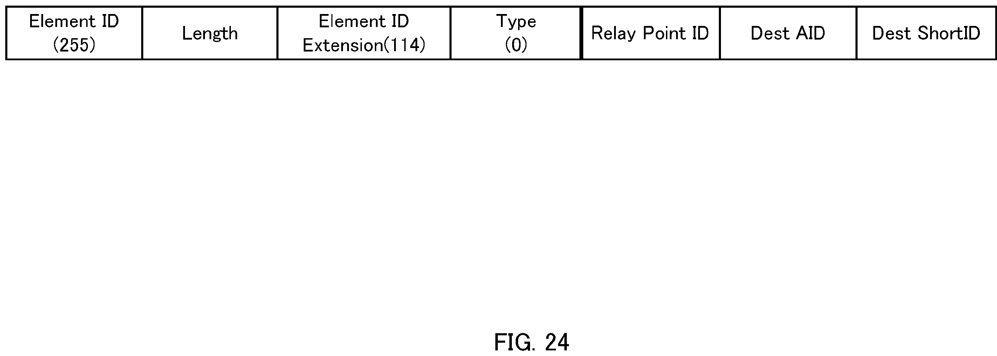

Here, the exemplary operation in the Relay setup phase using the new frame has been described, but the Relay Control element may be included in the Beacon, instead of the new frame, for example, as shown in FIG. 23. In order to specify the relay STA by the Beacon (broadcast transmission), for example, the AID (Relay Point ID) of the relay STA may be included in the Relay Control element shown in FIG. 17. FIG. 24 shows an exemplary format in which the Relay Point ID is added to the Relay Control element shown in FIG. 17.

### (Method 3)

In method 3, a case where another frame (for example, a Basic Trigger frame) other than the MU-RTS Trigger frame to be forwarded from the relay STA to the relay destination STA in the Relay operation described in method 2 is used will be described.

Note that the frame to be forwarded from the relay STA to the relay destination STA is not limited to the Basic Trigger, and may be, for example, a frame for requesting the relay destination STA to perform a transmission to the relay STA. The frame for requesting the relay destination STA to perform a transmission to the relay STA may be, for example, a frame including information for requesting the relay destination STA to transmit based on the Reverse Direction protocol, or a new Control frame (for example, a P2P transmission permission (P2P Grant) frame).

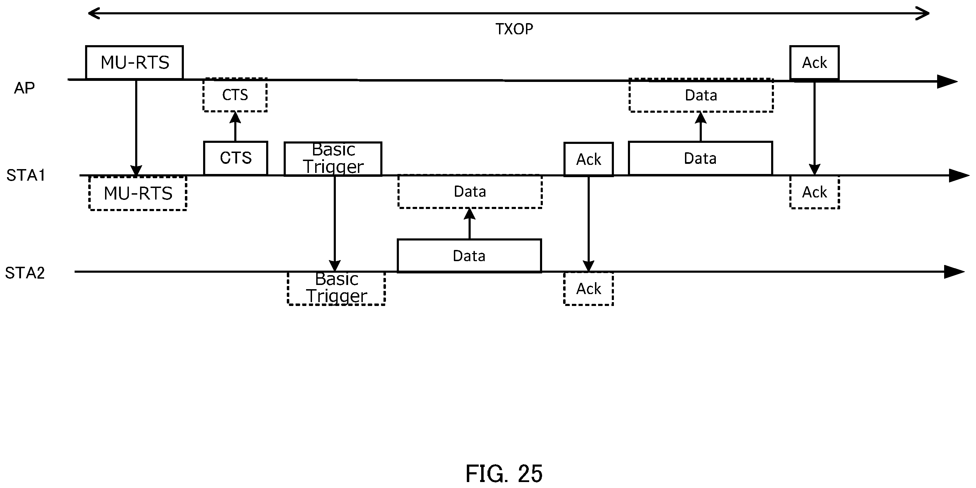

FIG. 25 shows an exemplary operation in which the MU-RTS Trigger frame is changed to the Basic Trigger frame.

In FIG. 25, the operation of STA1 (relay STA) from receiving the MU-RTS Trigger frame from the AP to transmitting the CTS as a response may be, for example, the same operation as method 2.

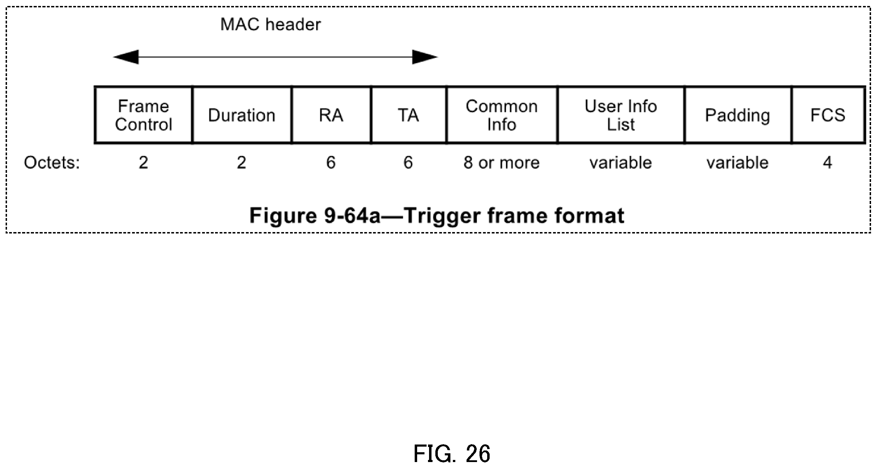

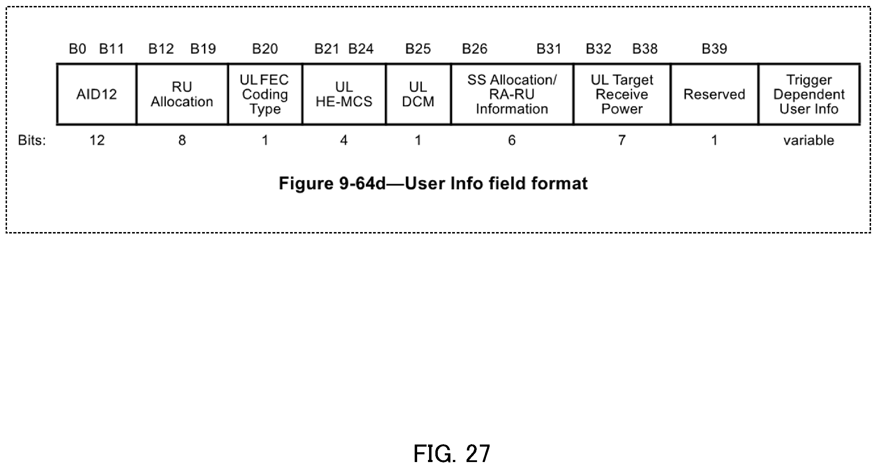

After transmitting the CTS, STA1 (relay STA) transmits the Basic Trigger frame to STA2 (relay destination STA). FIG. 26 shows an exemplary format of the Basic Trigger frame, and FIG. 27 shows an exemplary format of the User Info included in the Basic Trigger frame (for example, see NPL 4).

For example, in order to configure STA2 as the destination of the Basic Trigger frame transmitted by STA1, a MAC address or a broadcast address of the relay destination STA (STA2) may be set in the RA field (field indicating the destination) shown in FIG. 26, and the AID of the relay destination STA may be set in the AID12 field in the User Info shown in FIG. 27.

Note that a field (for example, referred to as a "Relay Flag") indicating whether or not the Basic Trigger frame is the Basic Trigger frame transmitted from the relay STA to the relay destination STA may be defined in Reserved (for example, Reserved shown in FIG. 27) in the Basic Trigger frame. For example, the Relay Flag may be set to 1 in a case where the Basic Trigger frame is the Basic Trigger frame transmitted from the relay STA to the relay destination STA, and the Relay Flag may be set to 0 in a case where the Basic Trigger frame is not the Basic Trigger frame transmitted from the relay STA to the relay destination STA.

In FIG. 25, in a case where STA2 (relay destination STA) receives the Basic Trigger frame from STA1 (relay STA), STA2 does not transmit the CTS. In addition, in a case where the Relay Flag = 1 in the Basic Trigger frame, STA2 may permit the transmission in the TXOP interval designated by the CTS transmitted by STA1 to the AP as the response to the MU-RTS from the AP, and may transmit the UL response. For example, in a case where STA2 holds in the buffer the UL data to be transmitted, STA2 may transmit a data frame (Data) as the UL response.

In a case where STA1 receives the UL response (for example, the data frame), STA1 may transmit the Ack to STA2 and may forward the data frame to the AP. The AP may receive the data frame forwarded from STA1 and may transmit the Ack to STA1.

As described above, by adding, to the Basic Trigger frame from the relay STA to the relay destination STA, a flag indicating that the Basic Trigger frame is the trigger frame to be transmitted to the relay destination STA, the relay destination STA can transmit the UL response.

### (Method 4)

In method 4, a case where the Basic Trigger frame is used instead of the MU-RTS Trigger frame transmitted from the AP to the relay STA in the Relay operation described in method 3 will be described.

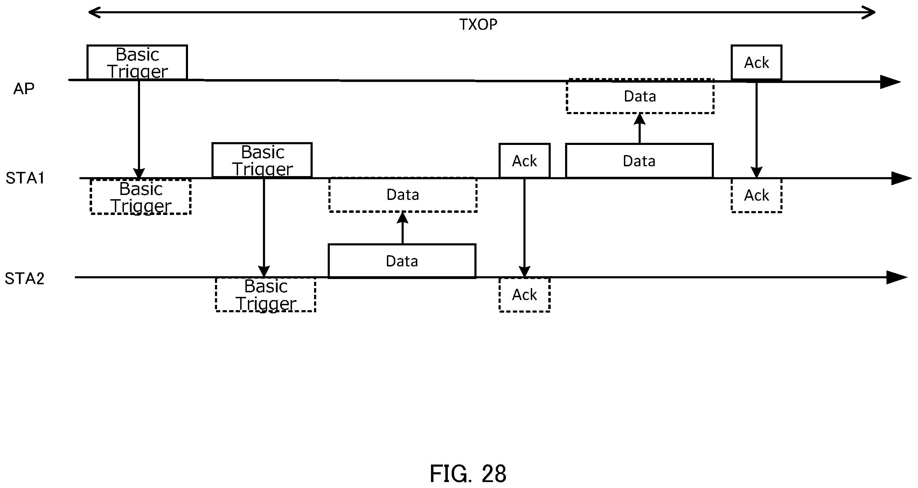

FIG. 28 shows an exemplary operation in a case where the MU-RTS Trigger frame is changed to the Basic Trigger frame.

In the exemplary operation shown in FIG. 28, the AP transmits the Basic Trigger frame as the trigger designating the Relay operation for STA1 (relay STA). In the Basic Trigger frame transmitted from the AP to the relay STA, an address of STA1 (relay STA) may be set in the RA field, and the AID of STA2 (relay destination STA) may be set in the AID12 in the User Info, for example, in the format shown in FIG. 26.

In FIG. 28, in a case where STA1 receives the Basic Trigger frame from the AP, STA1 does not transmit the CTS. In addition, in a case where the address of STA1 is designated in the RA field in the Basic Trigger frame and an AID different from both the AID of STA1 and the AID corresponding to the Special User Info is designated in the AID12 in the User Info, STA1 may determine that STA1 is the relay STA and the relay destination STA is designated by the AID12 in the User Info.

The subsequent operation may be, for example, the same operation as method 3, and configuration of the Relay Flag described in method 3 may not be performed.

As a result, even in a case where the relay destination STA is a terminal (for example, a legacy terminal) that does not perform the operation corresponding to the Relay indication, the Relay operation can be performed.

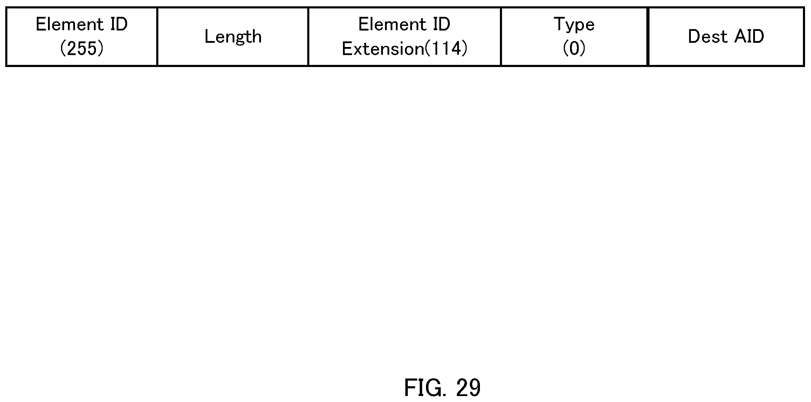

Note that determining (or specifying) the relay STA may be limited to, for example, a case where a single User Info is included in the Basic Trigger frame. Alternatively, determining (or specifying) the relay STA may be limited to a case where the AID12 in the User Info matches the AID of the relay destination STA notified by the Relay Control element described in method 2. In this case, as shown in FIG. 29, the Relay Control element may have a format including only the AID (Dest AID) of the relay destination STA.

In addition, the User Info of the Basic Trigger frame transmitted by the AP may have the configuration of the Special User Info described in method 2. As a result, the Basic Trigger frame can be specified as the trigger that indicates the Relay operation for the relay STA.

In addition, a case where the AID12 in the User Info is set to the AID of the relay destination STA in the Basic Trigger frame transmitted by the AP has been described, but the present disclosure is not limited to this, and for example, the Relay AID described in method 2 may be set instead of the AID of the relay destination STA.

### (Method 5)

In method 2, the exemplary operation has been described in which the AP transmits the MU-RTS Trigger frame to the relay STA as the Relay indication, and the relay STA forwards the MU-RTS Trigger to the relay destination STA, but in a case where the relay destination STA directly receives the MU-RTS Trigger transmitted from the AP, the forwarding of the MU-RTS Trigger frame from the relay STA to the relay destination STA is not required.

Note that, examples of the case where the relay destination STA directly receives the MU-RTS Trigger transmitted from the AP include a case where "transmission power of AP > transmission power of STA" and the relay destination STA can directly receive the signal from the AP in the DL but cannot directly transmit the signal to the AP in the UL, or a case where the relay is applied to transmit the UL data using a higher modulation and coding scheme (MCS) although the relay destination STA can transmit and receive the signal to and from the AP in both the DL and the UL.

In this case, whether or not forwarding the MU-RTS Trigger frame by the relay STA is required may be determined according to whether or not the relay destination STA can receive the MU-RTS Trigger frame transmitted from the AP. For example, in a case where the relay destination STA does not receive the Relay indication from the AP, the Relay indication may be forwarded from the relay STA to the relay destination STA, and in a case where the relay destination STA receives the Relay indication from the AP, the Relay indication may not be forwarded from the relay STA to the relay destination STA.

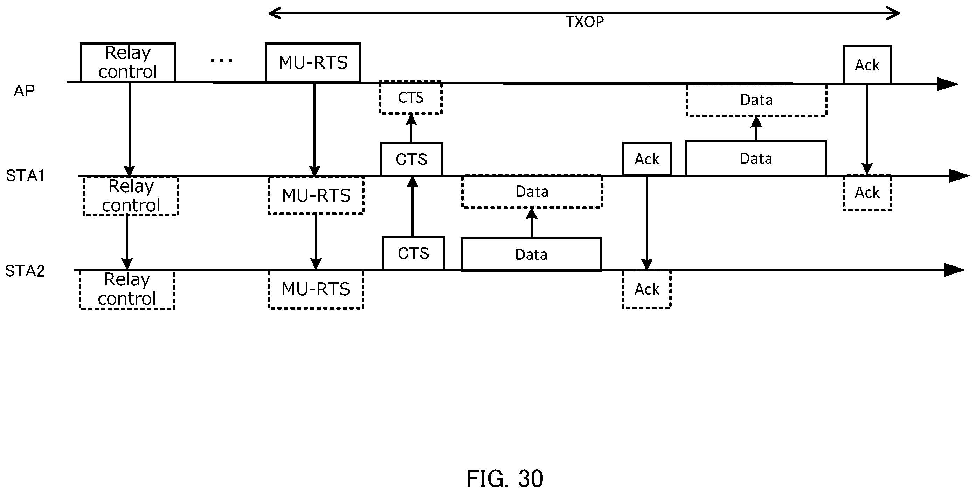

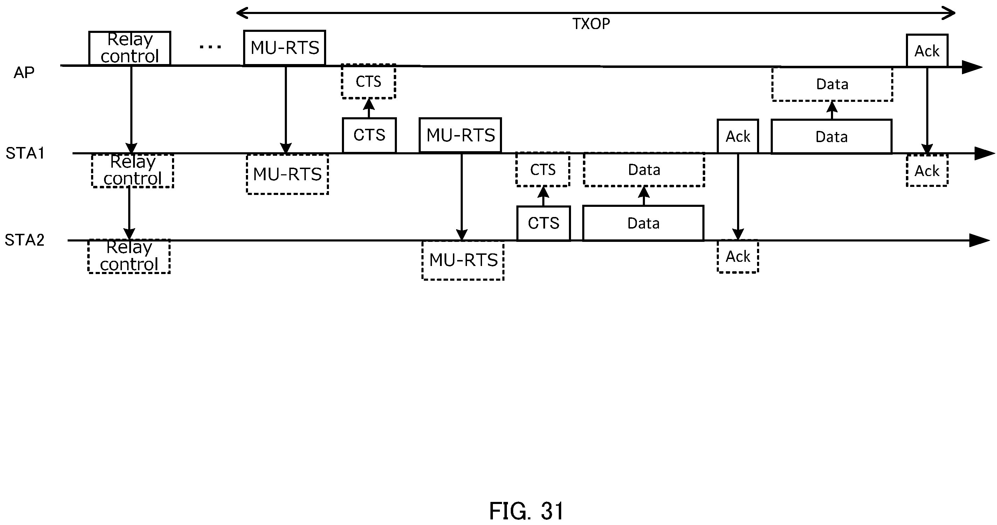

FIG. 30 shows an exemplary operation in a case where the relay destination STA receives the MU-RTS Trigger frame transmitted from the AP, and FIG. 31 shows an exemplary operation in a case where the relay destination STA does not receive the MU-RTS Trigger frame transmitted from the AP.

In FIG. 30 and FIG. 31, the AP may transmit, to both STA1 (relay STA) and STA2 (relay destination STA), the MU-RTS Trigger frame in which the relay STA and the relay destination STA are recognizable.

For example, as shown in FIGS. 30 and 31, the AP may notify STA1 and STA2 of the information related to the relay STA and the relay destination STA in advance, as described in method 2. As an example, the AP may notify STA1 and STA2 of the Relay Control element shown in FIG. 24 according to the method shown in FIG. 22, or may notify the Relay Control element from which the Dest Short ID is removed in the format of FIG. 24.

The AP transmits the MU-RTS Trigger frame indicating the Relay operation after the notification of the Relay Control element. In the MU-RTS Trigger frame, the same format as in method 2 may be used in which the AID of the relay STA is set in the AID12 in the User Info, and the AID (Dest AID) of the relay destination STA is added.

STA1 (relay STA) may determine that STA1 is the relay STA in a case where the AID12 in the User Info in the MU-RTS Trigger frame received from the AP designates the AID of STA1 and STA1 receives the MU-RTS Trigger frame indicating the Relay operation.

In a case where the AID12 in the User Info in the received MU-RTS Trigger frame is the AID of STA1 (relay STA), STA2 (relay destination STA) may continue the decryption of the received MU-RTS Trigger frame, and in a case where the Dest AID designated by the received MU-RTS Trigger frame is the AID of STA2, STA2 may determine that STA2 is the relay destination STA.

For example, as shown in FIG. 30, in a case where both STA1 (relay STA) and STA2 (relay destination STA) receive the MU-RTS Trigger frame from the AP, both STA1 and STA2 may transmit the CTS after the SIFS. Then, STA2 may transmit, for example, the UL data as described in method 1 after the CTS transmission and the SIFS. In addition, in a case where STA1 receives the UL data after the CTS transmission and the SIFS, STA1 may determine that the relay destination STAhas received the MU-RTS Trigger from the AP, and may not forward the MU-RTS Trigger frame to the relay destination STA. STA1 may forward, for example, the UL data to the AP in the same manner as in method 1.

In addition, for example, as shown in FIG. 31, in a case where STA1 (relay STA) receives the MU-RTS Trigger frame from the AP and STA2 (relay destination STA) does not receive the MU-RTS Trigger frame from the AP, STA1 may transmit the CTS after the SIFS. Then, in a case where STA1 does not detect any signal for a period (for example, PIFS or DIFS) longer than a period (for example, a period longer than the SIFS) in which the relay destination STA starts the data transmission after transmitting the CTS, STA1 may determine that the relay destination STA does not receive the MU-RTS Trigger from the AP, and may forward the MU-RTS Trigger frame to STA2 in the same manner as in method 2 or method 3. STA1 and STA2 may perform the data transmission and reception and the forwarding in the same manner as in method 1.

As described above, by attempting to detect the signal over the PIFS or the DIFS, the relay STA can detect whether or not the relay destination STA starts the data transmission, and the relay STA forwards the trigger to the relay destination STA in a case where the relay destination STA does not start the data transmission, and does not forward the trigger to the relay destination STA in a case where the relay destination STA starts the data transmission. As a result, the unnecessary trigger forwarding can be prevented, and the throughput can be improved.

Note that the format in which the relay STA is designated in the AID12 in the User Info of the MU-RTS Trigger frame transmitted by the AP has been described, but the present disclosure is not limited to this, and a format in which the relay destination STA is designated in the AID12 in the User Info and the AID of the relay STA is added instead of the Dest AID may be used. In this case, the relay STA may continue the decryption in a case where the relay STA receives the MU-RTS Trigger frame in which the AID12 in the User Info designates the AID of the relay destination STA, and may determine that the STA itself is the relay STA in a case where the ID of the relay STA designated by the MU-RTS Trigger frame is the ID of the STA itself. In addition, the relay destination STA may determine that STA is the relay destination STA in a case where the AID12 in the User Info is the AID of the STA itself and the MU-RTS Trigger frame indicates the Relay operation. In addition, the relay destination STA may perform, for example, the existing operation in a case of receiving the MU-RTS Trigger frame, without performing the determination (or specification) of the relay destination STA. As a result, even in a case where the relay destination STA is a terminal (for example, a legacy terminal) that does not perform the operation corresponding to the Relay indication, the Relay operation can be performed.

In addition, the exemplary operation has been described in which the relay STA or the relay destination STA is designated by the AID12 in the User Info of the MU-RTS Trigger frame transmitted by the AP, but the AP may notify the Relay Control element shown in FIG. 18 in advance and may notify the Relay ID by the AID12 in the User Info of the MU-RTS Trigger frame.

### (Method 6)

In method 6, a case where the Basic Trigger frame is used instead of the MU-RTS Trigger frame transmitted from the AP to the relay STA and from the relay STA to the relay destination STA in the Relay operation described in method 5 will be described.

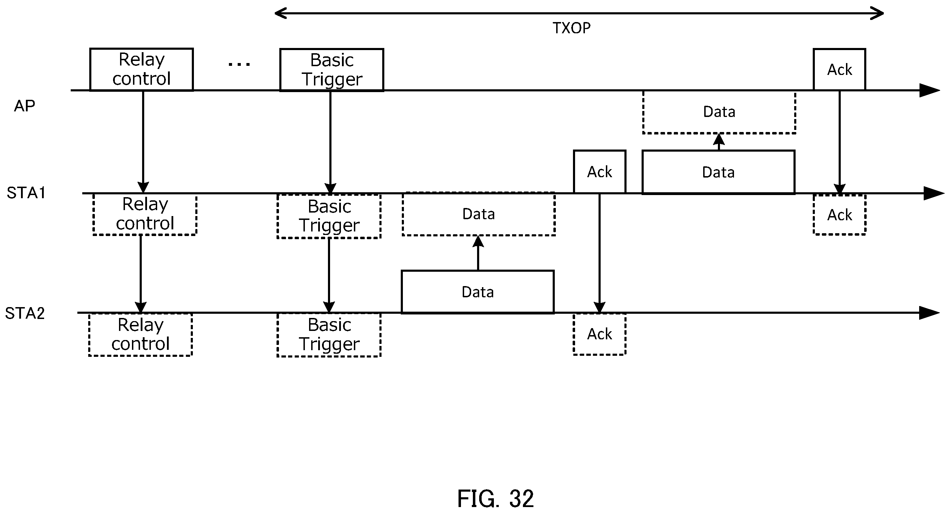

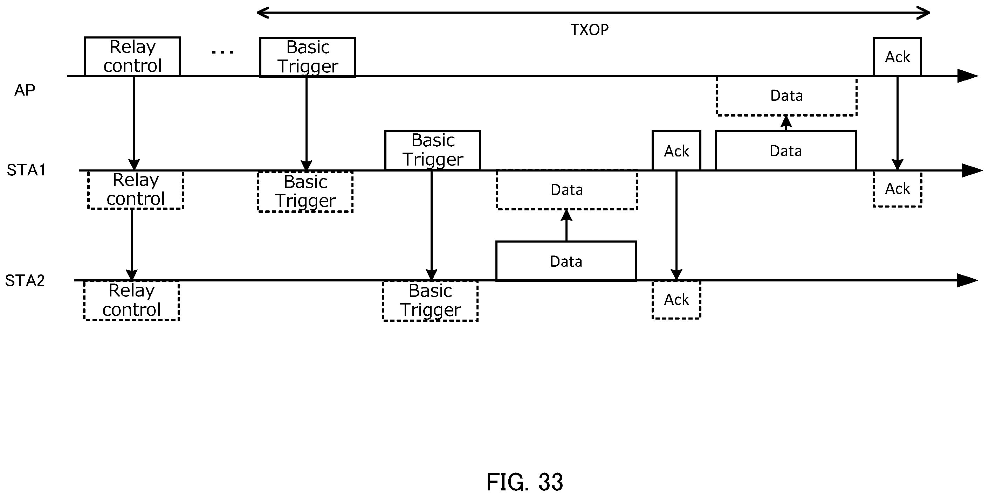

FIGS. 32 and 33 show exemplary operations in a case where the MU-RTS Trigger frame is changed to the Basic Trigger frame.

In FIGS. 32 and 33, the AP may transmit the Basic Trigger frame in which the relay STA and the relay destination STA are recognizable to both STA1 (relay STA) and STA2 (relay destination STA).

For example, as shown in FIGS. 32 and 33, as described in method 2, the AP may notify STA1 and STA2 of the information related to the relay STA and the relay destination STA in advance. As an example, the AP may notify STA1 and STA2 of the Relay Control element including the Relay AID shown in FIG. 18 according to the method shown in FIG. 22.

The AP transmits the Basic Trigger frame indicating the Relay operation after the notification of the Relay Control element. The Basic Trigger frame may have, for example, a format in which a broadcast address is set in the RA field and the Relay ID is set in the AID12 in the User Info.

In a case where the AID12 in the User Info of the Basic Trigger frame received from the AP designates the Relay ID in which the AID of STA1 is the Relay Point AID indicated by the Relay Control element, STA1 (relay STA) may determine that STA1 itself is the relay STA.

In a case where the AID12 in the User Info of the received Basic Trigger frame designates the Relay ID in which the AID of STA2 is the Dest AID indicated by the Relay Control element, STA2 (relay destination STA) may determine that STA2 itself is the relay destination STA.

For example, as shown in FIG. 32, in a case where both STA1 (relay STA) and STA2 (relay destination STA) receive the Basic Trigger frame from the AP, both STA1 and STA2 may transmit and receive the data as described in method 1 after the Basic Trigger frame reception and the SIFS. In a case where the relay STA receives the data after the Basic Trigger reception and the SIFS, the relay STA may determine that the relay destination STA has received the Basic Trigger from the AP, and may not forward the Basic Trigger frame to the relay destination STA. STA1 may forward, for example, the data to the AP in the same manner as in method 1.

In addition, for example, as shown in FIG. 33, in a case where STA1 (relay STA) receives the Basic Trigger frame from the AP and STA2 (relay destination STA) does not receive the Basic Trigger frame from the AP, STA1 may determine that the relay destination STA does not receive the Basic Trigger from the AP in a case where STA1 does not detect any signal for a period (for example, PIFS or DIFS) longer than a period (for example, a period longer than the SIFS) in which the relay destination STA starts the data transmission after receiving the Basic Trigger frame, and may forward the Basic Trigger frame to STA2 in the same manner as in method 4. STA1 and STA2 may perform the data transmission and reception and the forwarding in the same manner as in method 1.

As described above, by attempting to detect the signal for the PIFS or the DIFS, the relay STA can detect whether or not the relay destination STA starts the data transmission, and the relay STA forwards the trigger to the relay destination STA in a case where the relay destination STA does not start the data transmission, and does not forward the trigger to the relay destination STA in a case where the relay destination STA starts the data transmission. As a result, the unnecessary forwarding can be prevented, and the throughput can be improved.

Note that the format in which the Relay AID is designated in the AID12 in the User Info of the Basic Trigger frame transmitted by the AP has been described, but the present disclosure is not limited to this, and a format in which the AID of the relay destination STA is set in the AID12 in the User Info may be used. In this case, the relay STA may determine the STA itself as the relay STA in a case where the AID12 in the User Info of the received Basic Trigger frame designates the Dest AID (the AID of the relay destination STA) and the Relay Point AID indicated by the Relay Control element is the AID of the STA itself; in a case where the AID12 in the User Info designates the AID of the STA itself, the STA may determine itself to be the relay destination STA. In addition, the relay destination STA may perform, for example, the existing operation in a case of receiving the Basic Trigger frame without recognizing itself as the relay destination STA. In this case, a format in which the Relay ID is removed from the Relay Control element may be applied, and the Relay Control element may be notified to the relay STA and may not be notified to the relay destination STA. As described above, by designating the AID of the relay destination STA by the AID12 in the User Info, the Relay operation can be performed even in a case where the relay destination STA is a terminal (for example, a legacy terminal) that does not perform the operation corresponding to the Relay indication.

### (Method 7)

In the Relay operation described in methods 1 to 6, the AP may simultaneously perform an indication for transmission/reception (for example, the trigger transmission shown in methods 2 to 6) to a plurality of STAs (including STA that does not perform the Relay operation). In this case, since forwarding the trigger by the Relay operation and the UL transmission from other STAs can be simultaneously performed, there is a possibility of being affected by the interference.

For example, in method 7, the transmission frequency band for the trigger (for example, the Relay indication) transmitted to the relay destination STA by the relay STA and the transmission frequency band for the signal of the UL transmission by the other STA may be different from each other. As a result, it is possible to prevent the interference effect caused by the trigger transmission in the Relay operation.

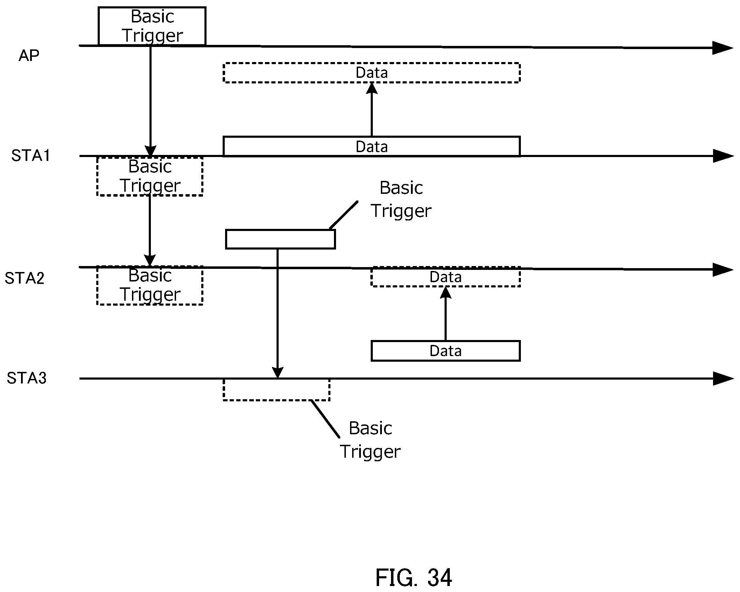

For example, FIG. 34 shows an exemplary operation in a case where the UL transmission indication to another STA (for example, STA1) is included in the Basic Trigger transmitted by the AP in addition to the Relay operation using the Basic Trigger frame described in method 4 and method 6.

In FIG. 34, the AP transmits the Basic Trigger frame including the User Info indicating the UL data transmission to STA1 in addition to the Relay indication described in method 4 and method 6 in a case where STA2 is the relay STA and STA3 is the relay destination STA. In this case, different frequency bands may be configured as the transmission frequency band for the UL data designated to the relay destination STA (STA3) and the transmission frequency band for the UL data designated to STA1.

In this case, STA2 (relay STA) may forward the Basic Trigger to STA3 in the transmission frequency band for the UL data of the relay destination STA designated by the Basic Trigger frame transmitted from the AP. That is, the transmission frequency band for the Basic Trigger frame to be forwarded from the relay STA may be configured in the transmission frequency band for the UL data of the relay destination STA.

As described above, by setting the frequency band for forwarding the Basic Trigger frame to the transmission frequency band for the relay destination STA, the frequency band for forwarding the Basic Trigger frame and the transmission frequency band for STA1 can be set to different frequency bands, and the interference effect on the UL data of STA1 due to the forwarding of the Basic Trigger can be suppressed.

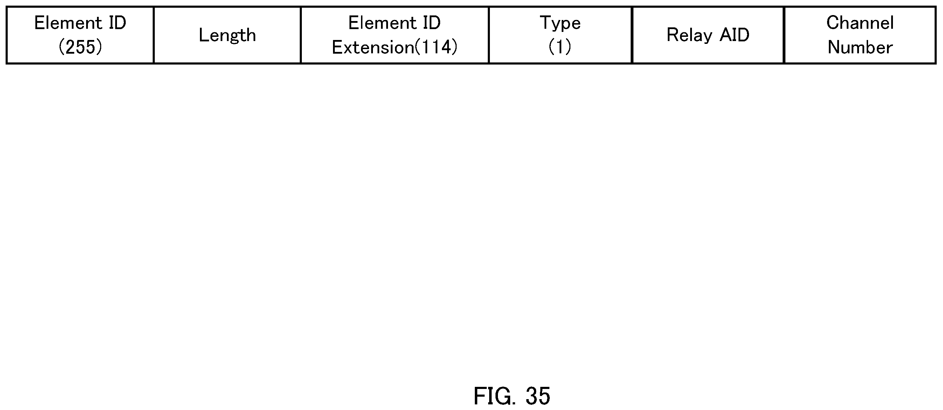

Note that, in FIG. 34, the transmission frequency band for the UL data for the relay destination STA designated by the Basic Trigger frame transmitted by the AP may be set (or limited) to the frequency band including a primary CH of the relay destination STA. For example, the AP may designate the primary CH of the relay destination STA to the relay STA and the relay destination STA in advance by the Relay Control element shown in FIG. 35. The primary CH designated by the Relay Control element may be the primary CH switched in the TXOP range designated by the Relay indication. As a result, the relay destination STA can perform a signal detection operation on the primary CH with respect to the Basic Trigger frame to be forwarded, in the same manner as in the existing method.

In addition, the assignment of the transmission frequency band for the UL data for the relay destination STA, together with the assignment of the preamble, may be, for example, in units of 20 MHz. As described above, by configuring the assignment of the transmission frequency band for the UL data in units of 20 MHz, the frequency band for the preamble included in the UL transmission data of the other STA (STA1 in FIG. 34) and the frequency band for the preamble included in the Basic Trigger frame to be forwarded can be made different from each other, and the interference effect can be suppressed.

Note that, in FIG. 35, Type = 1 indicates the Relay Control element that designates the primary CH, the Relay AID indicates the Relay AID notified by the Relay Control element (Type = 0), and the Channel Number indicates the number of the primary CH of the relay destination STA. Note that, in FIG. 35, the example has been described in which the primary CH is designated by the Relay Control element (Type = 1), but a format in which the channel number is added to the Relay Control element (Type = 0) may be applied.

In addition, in FIG. 34, the UL transmission procedure described in method 4 is shown as an example, but the UL transmission procedure may be any of the procedures of methods 1 to 3 and methods 5 to 7.

### (Method 8)

In method 8, a method of applying the collection and transmission of a buffer status report (BSR) in the Relay operation described in methods 1 to 7 will be described.

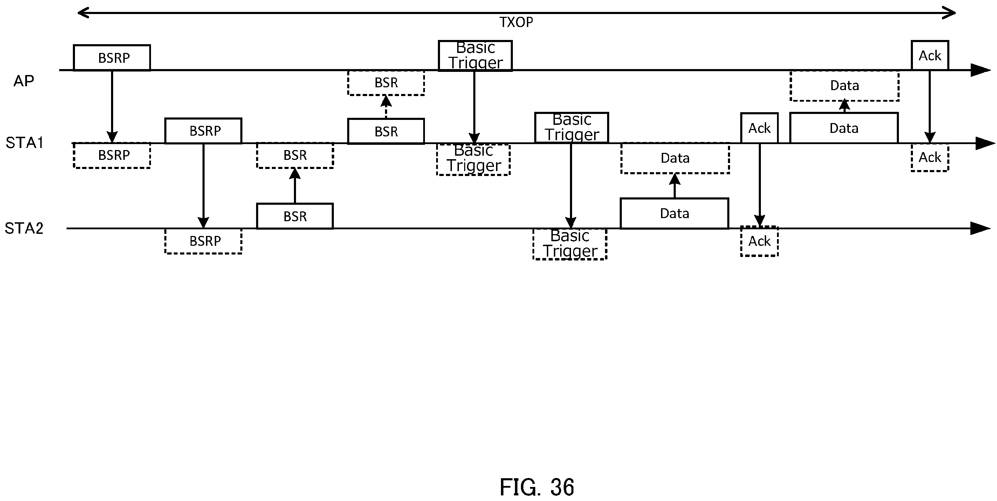

For example, as shown in FIG. 36, the AP transmits a frame (for example, a BSR Poll (BSRP)) for requesting the BSR of STA2 (relay destination STA). Note that the BSRP may include destinations of a plurality of other STAs (for example, STAs that do not perform the Relay operation (STA not shown in FIG. 36)).

STA1 (relay STA) receives the frame (for example, the BSRP) from the AP and transmits a frame (for example, the BSRP including a destination of at least STA2) for notifying that the BSR is requested from the AP to STA2. Note that another Control frame (for example, a Buffer Status Request frame, a Buffer Status Request frame for P2P, or the like) may be used instead of the BSRP.

STA2 (relay destination STA) transmits, for example, a PPDU including the BSR to STA1 in a case where the BSRP is received. In this case, the AP may be designated by a Destination Address or the like.

STA1 receives the PPDU including the BSR transmitted from STA2 and forwards the PPDU to the AP.

In a case where the presence of the transmission data from the relay destination STA to the AP is notified by the BSR, the AP may perform, for example, the UL transmission procedure (Relay operation) shown in FIG. 36. Note that, in FIG. 36, the UL transmission procedure described in method 4 is shown as an example, but the UL transmission procedure may be any of the procedures of methods 1 to 3 and methods 5 to 7.

### (Method 9)

In method 9, a method of applying the collection and transmission of the BSR in the Relay operation described in methods 1 to 7 will be described, which is a method different from method 8.

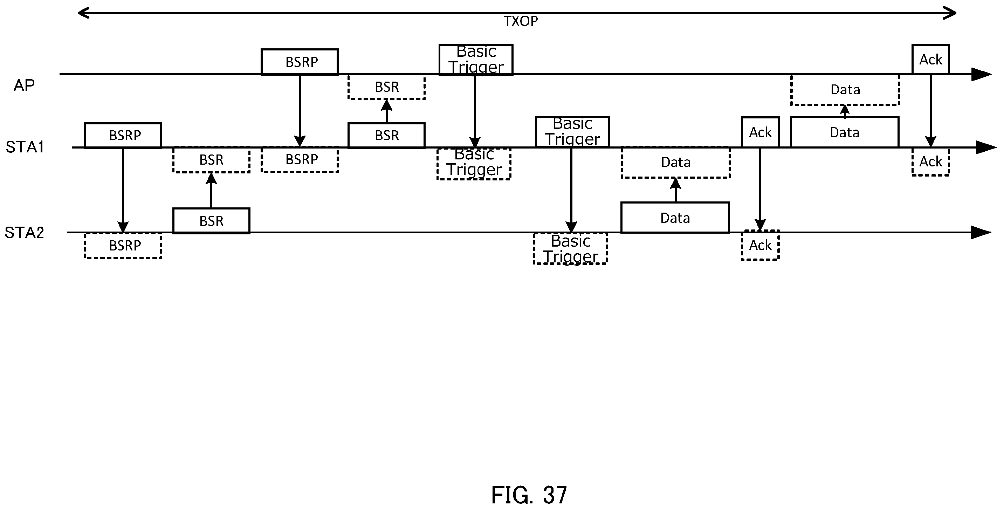

For example, as shown in FIG. 37, STA1 (relay STA) transmits a frame (for example, the BSRP) for requesting the transmission of information (for example, the BSR) related to the presence or absence of the transmission data to STA2 (relay destination STA). Note that another Control frame (for example, a Buffer Status Request frame, a Buffer Status Request frame for P2P, or the like) may be used instead of the BSRP. In addition, the information related to the presence or absence of the transmission data may include, for example, a data amount, a requested bandwidth (BW), a TID, an AC, and the like.

STA2 (relay destination STA) transmits, for example, a PPDU including the information (for example, the BSR) related to the presence or absence of the transmission data to STA1 in a case where the BSRP is received. In the BSR, for example, buffer information related to any or both of the data to the relay STA and the data transmitted to the AP via the relay STA (for example, relayed) may be included. For example, in the BSR, each piece of data may be distinguished by the TID or the destination address (for example, the AID).

STA1 may, for example, receive the BSRP from the AP, and may respond to the BSR by including at least one of the buffer information related to the data to the AP from STA1 (relay STA) or the buffer information related to the data transmitted to the AP from STA2 (relay destination STA) via the relay STA.

In a case where the presence of the transmission data from the relay STA or the relay destination STA to the AP is notified by the BSR, the AP may perform, for example, the UL transmission procedure (Relay operation) shown in FIG. 37. Note that, in FIG. 37, the UL transmission procedure described in method 4 is shown as an example, but the UL transmission procedure may be any of the procedures of methods 1 to 3 and methods 5 to 7.

### (Method 10)

In method 1, the exemplary operation has been described in which the Ack transmission that can be reduced as shown in FIG. 10 is deleted, but the operation of deleting the Ack transmission may be applied to the DL data transmission using the Relay operation. For example, the Ack transmission may be deleted in the DL transmission method using the Relay operation shown in FIG. 1.

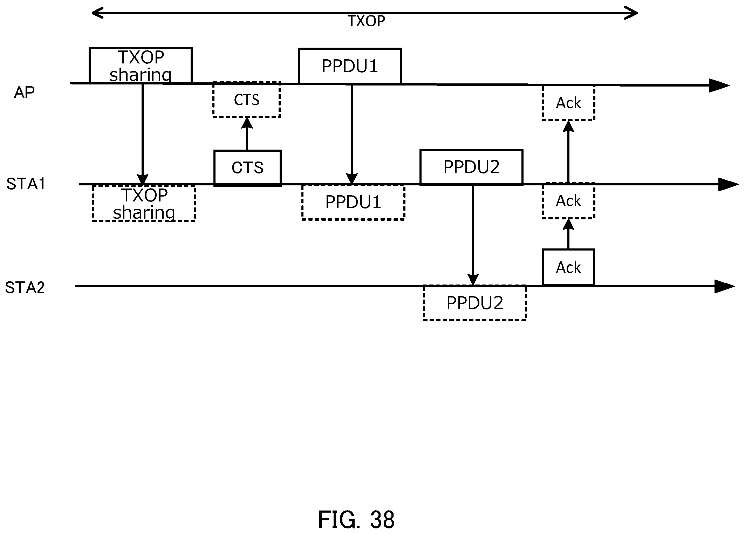

FIG. 38 shows an exemplary operation in which the Ack transmission is deleted in the DL transmission method using the relay.

As shown in FIG. 38, the Ack transmitted from STA1 to the AP after the AP transmits the PPDU1 may be deleted.

The AP may detect whether or not STA1 starts the transmission of the PPDU2 after the SIFS subsequent to PPDU1 reception, by attempting to detect the signal for a specified time (for example, PIFS or DIFS) after the transmission of the PPDU1. For example, the operation of STA1 in which STA1 successfully receives the PPDU1 and transmits the PPDU2 as a response is equivalent to the operation of STA1 in which STA1 successfully receives the PPDU1 and transmits the Ack as a response. Therefore, the AP detecting whether or not the PPDU2 is started to be transmitted is equivalent to the operation of the AP detecting the reception of the Ack. Therefore, in a case where the AP detects start of the transmission of the PPDU2, the AP may be regarded as having received the Ack for the PPDU1. As a result, the Ack transmitted from STA1 to the AP can be deleted, the unnecessary Ack transmission can be prevented, and the throughput can be improved.

In addition, in FIG. 38, for example, STA2 can perform transmission and reception in both the DL and the UL, but the relay may be applied in order to transmit the DL data using a higher MCS. In this case, as shown in FIG. 38, the Ack transmitted by STA2 can be received by the AP, and the operation of STA1 to forward the Ack of STA2 to the AP is not required. In this case, the operation of STA1 to forward the Ack of STA2 to the AP may be deleted, and the AP may receive the Ack of STA2. As a result, the unnecessary Ack forwarding can be prevented, and the throughput can be improved.

Note that the AP may indicate to STA1 whether or not forwarding the Ack from STA2 is required. For example, in a case where the Relay operation is applied in order to transmit using a higher MCS (for example, in a case where the Ack from STA2 can be received), the AP may indicate to STA1 that the forwarding of the Ack by STA2 is not required. In addition, for example, the Reserved of the Common Info field or the User Info of the TXOP Shearing trigger shown in FIG. 38 may be assigned for the indication that the forwarding of the Ack of STA2 is not required.

In addition, the AP may notify STA1 or STA1 and STA2 of the fact that the DL data transmission to which the Relay operation is applied. The notification may be performed by using, for example, Reserved (for example, value = 3) of the Triggered TXOP Sharing Mode subfield included in the TXOP Shearing trigger, or the above-described Relay Control element.

Methods 1 to 10 have been described above.

As described above, in the present embodiment, AP 200 controls the Relay operation for the relay destination STA that performs the UL transmission and the relay STA that relays the UL transmission, and receives the signal of the UL transmission. As a result, the relay of the UL transmission from STA 100 to AP 200 can be realized. Therefore, according to the present embodiment, the efficiency of the transmission control in radio communication can be improved.

The embodiments of the present disclosure have been each described, thus far.

Note that, in methods 2 to 9, the exemplary operations have been described in which the MU-RTS Trigger frame or the Basic Trigger frame is used, but the type of the Trigger frame is not limited to these, and another trigger may be used. For example, a new trigger (for example, a "Relay Trigger frame") may be used. For example, a value of a Trigger Type subfield may be set to 9 in the Relay Trigger frame. In this case, the format of the Relay Trigger frame may be the same format as the MU-RTS Trigger frame or the Basic Trigger frame shown in methods 2 to 9. As a result, in the exemplary operation of adding the Trigger Dependent User Info, it is possible to prevent a configuration in which the Trigger Dependent User Info tis added in only a specific mode by the same trigger.

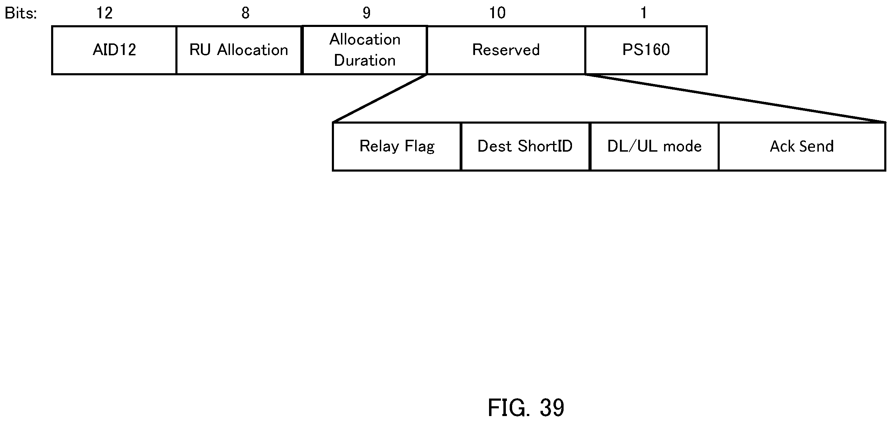

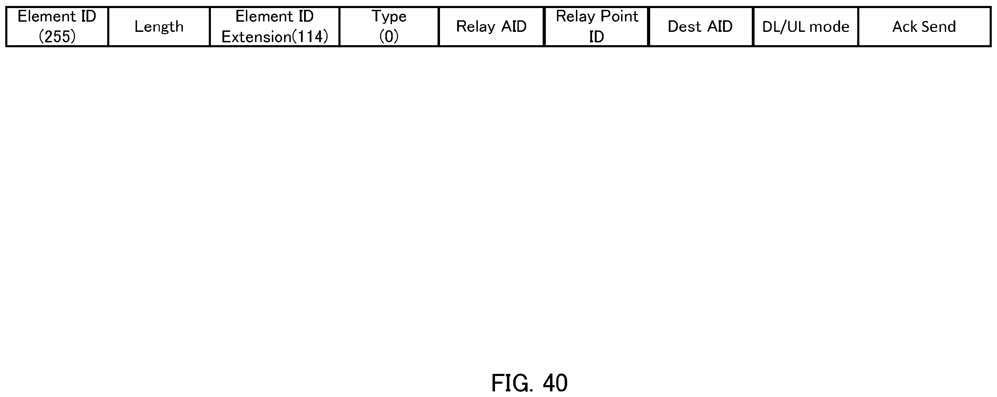

In addition, in methods 1 to 9, the exemplary operations of the UL transmission method using the relay have been described, but methods 1 to 9 may be applied to the DL transmission using the relay. In this case, the AP may designate the DL/UL transmission (unidirectional) of the data to the relay destination STA in addition to the relay STA, or may designate the transmission in both the DL and the UL directions in addition to the unidirectional transmission. For example, in a case where the DL transmission is designated, the DL transmission method described in FIG. 1 or method 10 may be performed. The designation of the DL/UL transmission may be performed by using, for example, Reserved included in the trigger, or the Relay Control element. For example, FIG. 39 shows an exemplary format in which a data transmission direction indication (for example, "DL/UL mode") and an indication of whether or not the Ack forwarding is required (for example, "Ack Send") as shown in method 1 and method 10 are added to the Reserved of the User Info of the MU-RTS Trigger shown in FIG. 16. In FIG. 39, the DL/UL mode may be, for example, "0: DL transmission, 1: UL communication, 2: bidirectional communication." In addition, in FIG. 39, the Ack Send may be, for example, "0: Ack forwarding required, 1: Ack forwarding not required." In addition, FIG. 40 shows an exemplary format in which the above-described DL/UL mode and the Ack Send are added to the Relay Control element shown in FIG. 18.

In addition, in methods 1 to 9, for example, in a case where the Relay operation is performed in order for the relay destination STA to perform transmission using a higher MCS, the relay destination STA can receive the trigger transmitted by the AP, and accordingly, the operation of forwarding the trigger to the relay destination STA by the relay STA is not required. In a case where the relay destination STA can receive the trigger transmitted from the AP, the AP may indicate to the relay STA that the trigger forwarding is not required. For example, the "Ack Send" shown in FIGS. 39 and 40 may be used as a flag indicating not only an indication of whether or not the Ack forwarding is required, but also an indication of whether or not the trigger forwarding is required (for example, the "Ack Send" may be changed to "Ack and Trigger Send"), or the flag indicating the indication of whether or not the trigger forwarding is required may be added to the trigger or the Relay Control element.

In addition, in methods 1 to 10, the frequency band for transmission and reception between the AP and the relay STA and the frequency band for transmission and reception between the relay STA and the relay destination STA may be different frequency bands. For example, the frequency band for transmission and reception between the relay STA and the relay destination STA may be changed (or set) to the frequency band including the primary CH of the relay destination STA, or a link for transmission and reception between the AP and the relay STA in the MLD configuration and a link for transmission and reception between the relay STA and the relay destination STA may be set as separate links.

In addition, in the above-described embodiment, the field (or the subfield) used for the notification of the control information is an example, and another field or subfield may be used. In addition, the number of bits used for the indication of the control information in each field or subfield is merely an example, and another number of bits may be used.

In addition, in the above-described embodiment, the values of the control information to be notified (for example, the AID, the element ID, the element ID extension, the value of the type, and the like) are an example, and another values may be used.

In addition, the format of the signal described in the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on the difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may include a transceiver and processing/control circuitry. The transceiver may include and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to one exemplary embodiment of the present disclosure includes: control circuitry, which, in operation, controls a relay operation for at least one of a first terminal that performs uplink transmission and a second terminal that relays the uplink transmission; and reception circuitry, which, in operation, receives a signal of the uplink transmission in accordance with a control of the relay operation.

In one exemplary embodiment of the present disclosure, transmission circuitry, which, in operation, transmits control information related to the relay operation is further included.

In one exemplary embodiment of the present disclosure, the control information is included in at least one of a trigger frame, a Control frame, and an element.

In one exemplary embodiment of the present disclosure, the control information is forwarded from the second terminal to the first terminal.

In one exemplary embodiment of the present disclosure, transmission control of the uplink transmission is different between a case where the relay operation is performed and a case where the relay operation is not performed.

In one exemplary embodiment of the present disclosure, processing of encrypting or decrypting the signal of the uplink transmission is different between a case where the relay operation is performed and a case where the relay operation is not performed.

In one exemplary embodiment of the present disclosure, the control information includes an indication for uplink transmission to another terminal different from the first terminal, and a first transmission frequency band for the control information forwarded from the second terminal to the first terminal is different from a second transmission frequency band for the signal of the uplink transmission by the other terminal.

In one exemplary embodiment of the present disclosure, the control information designates a third transmission frequency band for the uplink transmission by the first terminal, and the first transmission frequency band is configured within the third transmission frequency band.

In one exemplary embodiment of the present disclosure, the control information is forwarded from the second terminal to the first terminal in a case where the first terminal does not receive the control information from the access point, and the control information is not forwarded from the second terminal to the first terminal in a case where the first terminal receives the control information from the access point.

In one exemplary embodiment of the present disclosure, whether or not the control information is forwarded from the second terminal to the first terminal is controlled by the control information.

In one exemplary embodiment of the present disclosure, whether or not the second terminal transmits a response signal to the signal of the uplink transmission from the first terminal is controlled by the control information.

A terminal according to one exemplary embodiment of the present disclosure includes: control circuitry, which, in operation, controls a relay operation for another terminal that performs uplink transmission, based on control information from an access point; and transmission circuitry, which, in operation, transmits a signal of the uplink transmission from the other terminal to the access point in accordance with a control of the relay operation.

In a communication method according to one exemplary embodiment of the present disclosure, an access point controls a relay operation for at least one of a first terminal that performs uplink transmission and a second terminal that relays the uplink transmission; and receives a signal of the uplink transmission in accordance with a control of the relay operation.

In a communication method according to one exemplary embodiment of the present disclosure, a terminal controls a relay operation for another terminal that performs uplink transmission based on control information from an access point; and transmits a signal of the uplink transmission from the other terminal to the access point in accordance with a control of the relay operation.

The disclosure of Japanese Patent Application No. 2023-118346, filed on July 20, 2023, including the specification, drawings and abstract, is incorporated herein by reference in its entirety.

### Industrial Applicability

An exemplary embodiment of the present disclosure is useful for radio communication systems.

### Reference Signs List

100 STA
101 Radio transceiver
102 Reception packet decoder
103 Relay controller
104 Control signal generator
105 Transmission packet generator
200 AP
201 Scheduler

## Claims

1. An access point, comprising:
control circuitry, which, in operation, controls a relay operation for at least one of a first terminal that performs uplink transmission and a second terminal that relays the uplink transmission; and
reception circuitry, which, in operation, receives a signal of the uplink transmission in accordance with a control of the relay operation.

2. The access point according to claim 1, further comprising:
transmission circuitry, which, in operation, transmits control information related to the relay operation.

3. The access point according to claim 2, wherein
the control information is included in at least one of a trigger frame, a control frame, and an element.

4. The access point according to claim 2, wherein
the control information is forwarded from the second terminal to the first terminal.

5. The access point according to claim 1, wherein
transmission control of the uplink transmission is different between a case where the relay operation is performed and a case where the relay operation is not performed.

6. The access point according to claim 1, wherein
processing of encrypting or decrypting the signal of the uplink transmission is different between a case where the relay operation is performed and a case where the relay operation is not performed.

7. The access point according to claim 2, wherein:
the control information includes an indication for uplink transmission to another terminal different from the first terminal, and
a first transmission frequency band for the control information forwarded from the second terminal to the first terminal is different from a second transmission frequency band for the signal of the uplink transmission by the other terminal.

8. The access point according to claim 7, wherein:
the control information designates a third transmission frequency band for the uplink transmission by the first terminal, and
the first transmission frequency band is configured within the third transmission frequency band.

9. The access point according to claim 2, wherein:
the control information is forwarded from the second terminal to the first terminal in a case where the first terminal does not receive the control information from the access point, and
the control information is not forwarded from the second terminal to the first terminal in a case where the first terminal receives the control information from the access point.

10. The access point according to claim 9, wherein
whether or not the control information is forwarded from the second terminal to the first terminal is controlled by the control information.

11. The access point according to claim 2, wherein
whether or not the second terminal transmits a response signal to the signal of the uplink transmission from the first terminal is controlled by the control information.

12. A terminal, comprising:
control circuitry, which, in operation, controls a relay operation for another terminal that performs uplink transmission, based on control information from an access point; and
transmission circuitry, which, in operation, transmits a signal of the uplink transmission from the other terminal to the access point in accordance with a control of the relay operation.

13. A communication method, comprising:
controlling, by an access point, a relay operation for at least one of a first terminal that performs uplink transmission and a second terminal that relays the uplink transmission; and
receiving, by the access point, a signal of the uplink transmission in accordance with a control of the relay operation.

14. A communication method, comprising:
controlling, by a terminal, a relay operation for another terminal that performs uplink transmission, based on control information from an access point; and
transmitting, by the terminal, a signal of the uplink transmission from the other terminal to the access point in accordance with a control of the relay operation.
